# EUROPÄISCHE PATENTSCHRIFT

(11) **EP 3 010 984 B1**
(45) Veröffentlichungstag und Bekanntmachung des Hinweises auf die Patenterteilung: **29.03.2017**
(21) Anmeldenummer: 14725166.4
(22) Anmeldetag: 20.05.2014
(51) Int. Cl.: C09D 161/28, C09D 183/04, B32B 17/00, C03C 17/00, C09J 5/00

(54) **PIGMENTIERTES BESCHICHTUNGSMITTEL SOWIE VERFAHREN ZUR HERSTELLUNG EINER MEHRSCHICHTBESCHICHTUNG UNTER EINSATZ DES PIGMENTIERTEN BESCHICHTUNGSMITTELS ZUM ERHALT EINER SCHEIBENVERKLEBUNGSHAFTUNG**
PIGMENTED COATING AGENT AND METHOD FOR PRODUCING A MULTILAYER COATING USING THE PIGMENTED COATING AGENT FOR PRODUCING A PANE ADHESION
AGENT DE REVÊTEMENT PIGMENTÉ AINSI QUE PROCÉDÉ DE FABRICATION D'UN REVÊTEMENT MULTICOUCHES EN UTILISANT L'AGENT DE REVÊTEMENT PIGMENTÉ POUR COLLER DES VITRES

(30) Priorität: 21.06.2013 EP 13173147
(43) Veröffentlichungstag der Anmeldung: 27.04.2016
(73) Patentinhaber: BASF Coatings GmbH, 48165 Münster (DE)
(72) Erfinder: KUNSZT, Carmen, 97762 Hammelburg (DE); LÖW, Norbert, 91413 Neustadt a.d.Aisch (DE); FARWICK, Thomas, 48727 Billerbeck (DE); FELDMANN, Björn, 48165 Münster (DE)
(74) Vertreter: BASF IP Association
(86) Internationale Anmeldenummer: PCT/EP2014/060304
(87) Internationale Veröffentlichungsnummer: WO 2014/202313

(56) Entgegenhaltungen:
- WO-A1-01/07528
- DE-A1- 10 248 799

## Beschreibung

### Gebiet der Erfindung

Die vorliegende Erfindung betrifft ein lösungsmittelbasiertes, pigmentiertes Beschichtungsmittel enthaltend ein spezielles modifiziertes Organosiloxan. Die vorliegende Erfindung betrifft zudem ein Verfahren zur Herstellung einer Mehrschichtbeschichtung unter Einsatz des lösungsmittelbasierten pigmentierten, Beschichtungsmittels. Weiterhin betrifft die vorliegende Erfindung die Verwendung des lösungsmittelbasierten, pigmentierten Beschichtungsmittels beziehungsweise der Mehrschichtbeschichtung zur Verbesserung der Scheibenverklebungshaftung von Glasscheiben.

### Stand der Technik

Die bekannten lösungsmittelbasierten, pigmentierten Beschichtungsmittel, insbesondere die sogenannten Basislacke, werden beispielsweise in der Automobilindustrie zur Herstellung von ein- oder mehrschichtigen farb- und/oder effektgebenden Lackierungen eingesetzt. Insbesondere Mehrschichtlackierungen, in denen bekanntermaßen ein Klarlack über der Basislackschicht aufgebracht wird, weisen gute anwendungstechnische Eigenschaften auf.

Die stetig wachsenden technischen und ästhetischen Ansprüche des Marktes, insbesondere die Ansprüche der Automobilhersteller und ihrer Kunden, erfordern jedoch eine stetige Weiterentwicklung des bisher erreichten technischen und ästhetischen Niveaus.

Insbesondere müssen neue Beschichtungsmittel zur Verfügung gestellt werden, die einen im Vergleich zum Stand der Technik niedrigeren VOC (volatile organic content) aufweisen, sodass bei der Herstellung entsprechender Mehrschichtlackierungen weniger VOC-Emissionen auftreten und damit die Herstellung umweltfreundlicher gestaltet werden kann. Eine Senkung des VOC ist insbesondere durch eine Erhöhung des Festkörpers der jeweiligen Beschichtungsmittel zu erreichen.

Heutzutage werden beispielsweise bei der Herstellung von Mehrschichtlackierungen im Rahmen des bekannten Nass-in-Nass-Verfahrens (bei dem beispielsweise nach Vorlackierung eines pigmentierten Basislackes und kurzer Ablüftzeit dieses Lacks ohne Einbrennschritt ein Klarlack überlackiert wird und erst dann die Lackschichten gemeinsam eingebrannt werden) durch den Wechsel von Medium-Solid-Basislack-Systemen mit einem Festkörperanteil zwischen 20-30 % zu sogenannten High-Solid-Basislack-Systemen mit einem Festkörperanteil größer 35 % im applikationsfähigen Zustand (Spritzviskosität) eine signifikante VOC-Reduktion beim Verarbeitungsprozess erreicht. Ähnliches gilt für den Einsatz von High-Solid-Klarlacken (Klarlacke mit hohem Festkörper von bis zu 45 % oder höher bei Spritzviskosität). Eine Erhöhung des Festkörpers um nur etwa 3 bis 5 % im Rahmen industrieller Lackierprozesse bedeutet bereits eine enorme Einsparung von absolut einzusetzenden und daher bei der Verarbeitung in die Umwelt abgegebenen organischen Lösemitteln.

Neben dem Aspekt der Umweltfreundlichkeit ist es jedoch von zentraler Bedeutung, dass gleichzeitig andere technologische Eigenschaften und auch die ästhetischen Eigenschaften von Beschichtungsmitteln sowie von daraus hergestellten Mehrschichtlackierungen erhalten bleiben, wenn nicht gar verbessert werden. Zu diesen Eigenschaften zählen beispielsweise die Kratz-, Chemikalien- und Wetterbeständigkeit, aber insbesondere auch ein guter Verlauf der Beschichtungsmittel und das unter anderem daraus resultierende hochwertige Erscheinungsbild beziehungsweise der sehr gute optische Gesamteindruck (Appearance) der Mehrschichtlackierungen.

Die bei der Herstellung von solchen Mehrschichtlackierungen eingesetzten pigmentierten Beschichtungsmittel, insbesondere Basislacke, enthalten in der Regel ein polymerisierbares Bindemittel und einen Vernetzer. Beispielsweise besitzt das polymerisierbare Bindemittel dabei hydroxyfunktionelle Gruppen an einem polymeren Grundgerüst. Als Vernetzer werden häufig Melaminharze, beispielsweise monomere Vernetzungsharze wie Hexa(methoxymethyl)melamin (HMMM) oder gemischtveretherte Melamine eingesetzt. Ebenfalls als Vernetzer eingesetzt werden beispielsweise freie oder blockierte Polyisocyanate. Die bei der Herstellung eingesetzten Klarlacke basieren überwiegend auf carbamathaltigen Bindemittelsystemen, die in Kombination mit monomeren Vernetzungsharzen wie Hexa(methoxymethyl)melamin (HMMM) oder gemischt-veretherten Melaminen und gegebenenfalls weiteren polymerisierbaren Bindemitteln ein dichtes Netzwerk bilden können.

Durch den Einsatz der beschriebenen Beschichtungsmittel, insbesondere Basis- und Klarlacke gelingt es, einen hohen Festkörper (niedrigen VOC) mit den vom Kunden geforderten technologischen Vorteilen wie einem sehr guten optischen Gesamteindruck (Appearance) der resultierenden Mehrschichtlackierung zu vereinen.

Problematisch ist jedoch, dass die Haftung von auf solchen Mehrschichtlackierungen aufgebrachten Klebstoffen, beispielsweise zur Verklebung von Windschutzscheiben, häufig nicht den Anforderungen genügt. Die Verklebungsgrenze zwischen Mehrschichtlackierung, insbesondere dem Klarlack, und der Glasscheibe stellt eine deutliche Schwachstelle im Gesamtaufbau dar. Während die Haftung/Verklebung zwischen Glasscheibe und Klebstoffschicht keine Probleme bereitet beziehungsweise durch den Einsatz typischer Klebematerialien sehr gut ist, ist insbesondere die Haftung zwischen der Klarlackschicht und der Klebstoffschicht der kritische Schwachpunkt im Gesamtaufbau.

Windschutzscheiben werden üblicherweise mit einem feuchtehärtenden Klebematerial auf Basis von Isocyanatgruppen-enthaltenden Polymeren an eine mit einer Mehrschichtlackierung beschichtete Karosse geklebt. Motor Vehicle Safety Standards (MVSS) erfordern, dass dieser Klebstoff eine komplette Adhäsion zur Windschutzscheibe und zu der Mehrschichtlackierung hat. Es ist dem Fachmann bekannt, dass insbesondere wie oben beschriebene Mehrschichtlackierungen auf Basis von Carbamat und Melamin, die ansonsten gute anwendungstechnologische und optische Eigenschaften besitzen, eine deutliche Schwäche bezüglich der Scheibenverklebungshaftung zeigen. Deshalb wird in der Automobilindustrie größtenteils immer noch ein Primer auf die Mehrschichtlackierung appliziert, ehe der Klebstoff aufgetragen wird. Durch die Verwendung eines solchen zusätzlichen Primers zwischen Mehrschichtlackierung und Klebstoff entstehen erhebliche zusätzliche Kosten aufgrund des zusätzlichen Material- und Zeitbedarfs.

Der Klebstoff kann auch direkt auf die Mehrschichtlackierung aufgebracht werden, ohne dass ein Primer als Zwischenschicht zwischen Mehrschichtlackierung und Klebstoff eingesetzt wird (Primerless-Verfahren). Das Primerless-Verfahren wird heutzutage vermehrt im Automobilbereich eingesetzt, allerdings wird eine genaue Prozessüberwachung, wie beispielsweise eine äußerst genaue Kontrolle der Schichtdicken von Basislack und Klarlack, der Einbrennzeiten und -temperaturen benötigt. Selbst durch eine genaue Prozessüberwachung kann nicht immer sichergestellt werden, dass die Klebstoffe an den Mehrschichtlackierungen ausreichend haften. Insbesondere in Fällen von zu hohen Basislack-Schichtdicken kombiniert mit niedrigen Klarlack-Schichtdicken kann es zur unerwünschten Enthaftung der Scheibenverklebungsmasse von der Mehrschichtlackierung kommen. So ist es beispielsweise bekannt, dass die in den beschriebenen Basislacken enthaltenen Melaminharze zwar zu einem guten optischen Gesamteindruck (Appearance) der Mehrschichtlackierung beitragen, jedoch schichtübergreifend zu unerwünschten Wechselwirkungen mit den für die Scheibenverklebung eingesetzten Klebstoffen führen und dadurch eine nicht ausreichende Haftung resultiert. Dies gilt insbesondere für die feuchtigkeitshärtenden, isocyanat-basierten Klebstoffe, die üblicherweise aufgrund ihres ansonsten hervorragenden Eigenschaftsprofils für die Scheibenverklebung eingesetzt werden. Durch eine deutliche Verringerung des Melaminharzanteils beziehungsweise das Weglassen dieser Melaminharze im Basislack lässt sich diese Störwirkung zwar reduzieren. Allerdings weisen derartige Formulierungen eine verschlechterte Appearance auf und lassen sich teils auch nur mit einem deutlich reduzierten Festkörperanteil herstellen.

Teilweise wird versucht, eine Optimierung der Scheibenverklebungshaftung auf Mehrschichtlackierungen durch Modifikationen im Klarlack und/oder Basislack zu erzielen.

WO 2008/021712 A2 beschreibt die Verwendung eines Haftungsadditivs auf Basis von Borsäure bzw. eines Borsäurederivats und eines Esters bei der Herstellung von Mehrschichtlackierungen. Der Einsatz dieses Additivs in einem Carbamat-Melamin-Klarlack ergibt eine Verbesserung in der Scheibenverklebungshaftung.

US 2003/232222 A1 beschreibt ebenfalls die Verwendung eines Additivs auf Basis von Borsäure bzw. eines Borsäurederivats und eines Esters in einer oder beiden Schichten der Mehrschichtlackierung, um so die Zwischenschichthaftung bzw. die Scheibenverklebungshaftung zu verbessern.

WO 2007/008635 A1 beschreibt eine Mehrschichtlackierung, in der ein Basis- und/oder Klarlack eingesetzt wird, der ein spezielles Additiv enthält. Das Additiv enthält funktionelle Gruppen, die nicht oder nur wenig mit den polymeren Bindemitteln oder dem Vernetzer des Lacks reagieren. Dieses Additiv reichert sich im Grenzflächenbereich an der Oberfläche der Lackierung oder an der Zwischengrenzschicht zwischen Basis- und Klarlack an und führt dazu, dass die Scheibenverklebungshaftung oder die Zwischenschichthaftung verbessert wird. Als geeignete Additive werden (Meth)Acrylatester- oder alpha-Olefin-basierte Polymere beschrieben. Der Zusatz des Additivs führt weiterhin zu Vorteilen hinsichtlich des Verlaufs und der Benetzung, wodurch ein Verzicht auf Netzmittel und Verlaufsadditive im Klarlack möglich ist. Zur Verbesserung der Scheibenverklebungshaftung wird das Additiv im Klarlack eingesetzt.

WO 2006/063304A1 beschreibt die Verwendung eines Additivs auf Basis eines Hydroxyl-funktionellen Epoxypolymers zur Verbesserung der Zwischenschichthaftung oder Scheibenverklebungshaftung. Zur Verbesserung der Scheibenverklebungshaftung wird das Additiv im Klarlack eingesetzt. Das Additiv reagiert nur begrenzt mit den funktionellen Gruppen im Klarlack und reichert sich im Grenzflächenbereich an der Oberfläche der Lackierung an, wodurch die Scheibenverklebungshaftung verbessert werden kann.

WO 2008/100548 A1 beschreibt einen Klarlack auf Basis eines Carbamatfunktionellen Polymers und eines Melaminharzes. Zur Optimierung der Scheibenverklebungshaftung wird sowohl im Klarlack als auch im Basislack ein Haftungsvermittler auf Basis Dibutylzinndiacetat und Butylphosphorsäure eingesetzt.

WO 2005/105938 A1 beschreibt einen Klarlack auf Basis eines OH-Polyesters und eines Polyisocyanat-Vernetzers. Niedermolekulare Silan-haltige Komponenten werden im Klarlack eingesetzt, um unter anderem die Scheibenverklebungshaftung zu optimieren.

WO 2005/046889 A1 beschreibt eine Mehrschichtlackierung, wobei sowohl der Klarlack als auch der drauf aufgebrachte Klebstoff zur Scheibenverklebung Silangruppen enthalten. Die vorteilhafte Wirkung solcher Silankomponenten wird beim Einsatz der üblichen Alkyl- oder Aryl-Phosphorsäure-Katalysatoren im Basislack jedoch häufig stark beeinträchtigt. Es wird beschrieben, dass durch die ersatzweise Verwendung eines starken Säure-Katalysators im Basislack die Wirkung der Silankomponente weniger beeinträchtigt wird. Die Verwendung von Epoxy-Isocyanatblockierten Katalysatoren wird dabei bevorzugt, da sie im Gegensatz zu Aminblockierten Katalysatoren eine bessere Appearance ergeben.

WO 2010/121794 A2 beschreibt den Einsatz eines Polyesterbindemittels mit einer Hydroxylzahl von mindestens 240 mg KOH/g und einer Säurezahl von höchstens 10 mg KOH/g in einem Melaminharz-basierten Basislack zur Verbesserung der Scheibenverklebungshaftung von Mehrschichtlackierungen.

WO 01/07528 A1 beschreibt ein Beschichtungsmittel enthaltend ein organisches Harz, ein Pigment, ein reaktives Wachs und eine Vernetzungszusammensetzung enthaltend einen aminofunktionellen Härter, ein blockiertes Polyisocyanat und ggf. ein epoxy₋, amino- und/oder blockiertes isocyanat-funktionelles Organosiloxan zur Beschichtung von keramischen Substraten, insbesondere von Glassubstraten. Das optionale Organosiloxan in der Vernetzungszusammensetzung wird zur Verbesserung der Haftung des Beschichtungsmittels auf das Substrat verwendet.

DE 102 48 799 A1 beschreibt eine Harzzusammensetzung zur Beschichtung von Oberflächen enthaltend eine Dispersion, die speziellen harte Mikrohohlpartikel aufweist. Hierin offenbart wird, dass Polysiloxane zur Einstellung der Anti-Fingerprint-Eigenschaften zugegeben werden können.

Trotz der verschiedenen Ansätze zur Erreichung einer guten Scheibenverklebungshaftung durch Modifikation von Basis- und/oder Klarlacken in Mehrschichtlackierungen ist nach wie vor eine weitere Optimierung notwendig, um den steigenden Anforderungen in den verschiedenen Industriebereichen, insbesondere im Bereich der Automobilindustrie, gerecht zu werden. Insbesondere in Mehrschichtsystemen, in denen Melaminharz-basierte pigmentierte Beschichtungsstoffe mit hohen Festkörpergehalten als Basislacke eingesetzt werden, stellt die Vereinbarung von guten anwendungstechnischen Eigenschaften, insbesondere einer guten Appearance, und einer zufriedenstellenden Scheibenverklebungshaftung eine große Herausforderung dar.

Es bestand somit der Bedarf, ein pigmentiertes Beschichtungsmittel zu entwickeln, welches bei Einsatz in Mehrschichtlackierungen, insbesondere solchen, in denen auf das pigmentierte Beschichtungsmittel ein Klarlack aufgebracht wird, zu einer hervorragenden Appearance und gleichzeitig einer sehr guten Scheibenverklebungshaftung führt. Zudem sollten weitere anwendungstechnologische Eigenschaften des Beschichtungsmittels wie insbesondere ein hoher Festkörpergehalt bei Spritzviskosität weiterhin unverändert erhalten bleiben oder sogar verbessert werden.

### Aufgabe

Der vorliegenden Erfindung lag demnach die Aufgabe zugrunde, ein lösungsmittelbasiertes, pigmentiertes Beschichtungsmittel bereitzustellen, welches bei Einsatz zur Herstellung von Mehrschichtlackierungen nicht nur zu hervorragenden anwendungstechnischen Eigenschaften der Mehrschichtlackierung, insbesondere einer guten Appearance, führt, sondern gleichzeitig auch eine gute Scheibenverklebungshaftung zulässt. Es sollten also die Probleme bekannter Beschichtungsmittel, bei deren Einsatz zur Herstellung von Mehrschichtlackierungen regelmäßig das Erreichen einer guten Appearance mit einer nicht ausreichenden Scheibenverklebungshaftung einhergeht beziehungsweise eine ausreichende Scheibenverklebung gleichzeitig eine verschlechterte Appearance bedeutet, vermieden werden. Weiterhin sollte das so angepasste System zusätzlich mit einem hohen Festkörpergehalt vereinbar sein, das heißt das lösungsmittelbasierte, pigmentierte Beschichtungsmittel sollte einen aus ökologischen Gründen angestrebten niedrigen VOC-Gehalt aufweisen.

### Lösung

Es wurde gefunden, dass die oben genannte Aufgabe gelöst wird durch ein lösungsmittelbasiertes, pigmentiertes Beschichtungsmittel mit einem Festkörperanteil von mindestens 35 % enthaltend
(A) mindestens ein Melaminharz,
(B) mindestens ein Pigment,
(C) mindestens ein organisches Lösungsmittel und
(D) mindestens ein Organosiloxan der allgemeinen Formel (I) 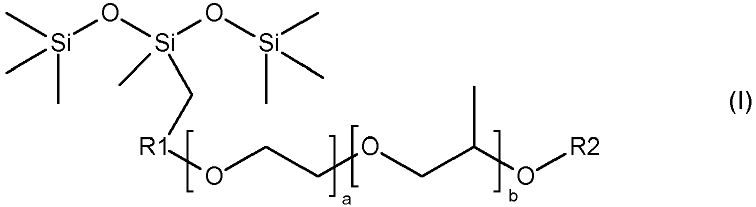 wobei R₁ = CₙH₂ₙ mit n = 1 bis 3; R₂ = H, CₘH₂ₘ₊₁ mit m = 1 bis 4; a = 0 bis 20; b = 0 bis 20 und a + b = 2 bis 40 ist.

Beschichtungsmittel mit einem Festkörperanteil von 35 % und mehr werden als High-Solid-Beschichtungsmittel bezeichnet. Dementsprechend handelt es sich bei dem lösungsmittelbasierten, pigmentierten Beschichtungsmittel um ein High-Solid-Beschichtungsmittel.

Das oben genannte Beschichtungsmittel wird in der Folge auch als erfindungsgemäßes Beschichtungsmittel bezeichnet und ist dementsprechend Gegenstand der vorliegenden Erfindung. Bevorzugte Ausführungsformen des erfindungsgemäßen Beschichtungsmittels sind der weiter unten folgenden Beschreibung sowie den Unteransprüchen zu entnehmen.

Weiterhin ist Gegenstand der vorliegenden Erfindung ein Verfahren zur Herstellung einer Mehrschichtlackierung, bei dem
(1) mindestens ein Basislack auf ein Substrat aufgebracht wird,
(2) aus dem in Stufe (1) aufgebrachten Basislack ein Polymerfilm gebildet wird,
(3) auf die so erhaltene Basislackschicht mindestens ein Klarlack aufgebracht wird und anschließend
(4) die Basislackschicht zusammen mit dem in Stufe (3) aufgebrachten Klarlack gehärtet wird,
dadurch gekennzeichnet, dass als Basislack ein erfindungsgemäßes Beschichtungsmittel eingesetzt wird und wobei eine Klarlackschicht die oberste Schicht der Mehrschichtlackierung ist.

Zudem ist Gegenstand der vorliegenden Erfindung eine Mehrschichtlackierung, die durch das erfindungsgemäße Verfahren hergestellt wurde.

Ebenfalls Gegenstand der vorliegenden Erfindung ist ein Verfahren zur Herstellung einer Mehrschichtbeschichtung bei dem
(1) eine erfindungsgemäße Mehrschichtlackierung hergestellt wird und
(2) unmittelbar auf die oberste Klarlackschicht der Mehrschichtlackierung ein Klebstoff aufgebracht wird, wobei eine Klebstoffschicht ausgebildet wird.

Gegenstand der vorliegenden Erfindung ist auch eine Mehrschichtbeschichtung, die nach dem genannten Verfahren zur Herstellung einer Mehrschichtbeschichtung hergestellt wurde.

Weiterhin ist ein Substrat, welches mit einer erfindungsgemäßen Mehrschichtbeschichtung beschichtet ist, Gegenstand der vorliegenden Erfindung.

Ein weiterer Aspekt der Erfindung ist die Verwendung der erfindungsgemäßen Mehrschichtbeschichtung zum Verkleben von Glasscheiben auf einem mit der Mehrschichtbeschichtung beschichteten Substrat, wobei
(1) eine erfindungsgemäße Mehrschichtlackierung hergestellt wird,
(2) unmittelbar auf die oberste Klarlackschicht der Mehrschichtlackierung ein Klebstoff aufgebracht wird, wobei eine Klebstoffschicht auf der Mehrschichtlackierung und damit eine erfindungsgemäße Mehrschichtbeschichtung ausgebildet wird,
   und
(3) eine Glasscheibe auf die Klebstoffschicht aufgebracht wird und anschließend der Klebstoff ausgehärtet wird.

Demnach ist auch die Verwendung des erfindungsgemäßen Beschichtungsmittels zur Verbesserung der Scheibenverklebungshaftung Gegenstand der vorliegenden Erfindung.

Aus Obigem folgt, dass im Rahmen der vorliegenden Erfindung schon aus Gründen der Übersichtlichkeit die mit einer Klebstoffschicht beschichtete Mehrschichtlackierung als Mehrschichtbeschichtung bezeichnet wird.

Insbesondere wurde gefunden, dass das erfindungsgemäße Beschichtungsmittel die Nachteile der bekannten lösemittelbasierten, pigmentierten Beschichtungsmittel auf Melaminbasis nicht länger aufweist, sondern im Gegenteil bei Einsatz zur Herstellung von Mehrschichtlackierungen gleichzeitig zu einer guten Appearance und einer hervorragenden Scheibenverklebungshaftung führt. Die genannten Eigenschaften werden also vereinbart. Zusätzlich hat das erfindungsgemäße Beschichtungsmittel einen hohen Festkörpergehalt und ist somit nicht nur unter anwendungstechnischen Aspekten, sondern auch unter ökologischen Aspekten sehr vorteilhaft. Insbesondere überraschend war, dass durch die Kombination von Melaminharzen mit den speziellen Organosiloxanen der Formel (I) in lösungsmittelbasierten, pigmentierten Beschichtungsmitteln die genannten Vorteile, insbesondere die Verbesserung der Scheibenverklebungshaftung auf der Klarlackschicht der Mehrschichtlackierung, erzielt werden konnten.

### Ausführliche Beschreibung der Erfindung

### Die erfindungsgemäße Mehrschichtlackierung und Verfahren zu deren Herstellung

Die erfindungsgemäßen Mehrschichtlackierungen sind bevorzugt so aufgebaut, dass auf einem Substrat zunächst eine Grundierung aufgetragen worden ist. Darüber befindet sich bevorzugt mindestens eine Füllerlackierung eines Füllers sowie mindestens eine Basislackierung eines Basislacks und darüber mindestens eine Klarlackierung eines Klarlacks, wobei eine Klarlackierung beziehungsweise Klarlackschicht die oberste Schicht der Mehrschichtlackierung darstellt. Bevorzugt wird von den genannten Beschichtungsmitteln genau eines eingesetzt. Die Basislackierung wird dabei durch Einsatz des erfindungsgemäßen Beschichtungsmittels hergestellt, das heißt bei dem erfindungsgemäßen Beschichtungsmittel handelt es sich bevorzugt um einen Basislack.

Bei dem oben genannten Schichtaufbau handelt es sich um den gängig im Bereich der Automobillackierung eingesetzten Schichtaufbau. Die erfindungsgemäße Mehrschichtlackierung ist demnach bevorzugt eine Automobilmehrschichtlackierung.

Aus dem oben Gesagten folgt, dass im Rahmen des erfindungsgemäßen Verfahrens bevorzugt vor dem Auftragen des Basislacks eine Grundierung sowie ein Füller aufgetragen werden. Diese werden bevorzugt vor dem Auftrag des Basislacks wie weiter unten beschrieben jeweils separat gehärtet. Im Rahmen des erfindungsgemäßen Verfahrens wird das erfindungsgemäße Beschichtungsmittel jedenfalls als Basislack eingesetzt. Es kann aber beispielsweise auch zusätzlich als Füller eingesetzt werden.

Die Substrate sind üblicherweise mit einer Grundierung, beispielsweise einer Elektrotauchlackierung, insbesondere einer kathodischen Elektrotauchlackierung versehen. Diese wird mit den üblichen Verfahren wie Elektrotauchlackierung, Tauchen, Rakeln, Spritzen, Walzen oder ähnlichem, appliziert. Bevorzugt wird die Grundierung zumindest teilweise oder vollständig, insbesondere vollständig, ausgehärtet, bevor Füller, Basis- und Klarlack appliziert werden. Die Aushärtung der Grundierung erfolgt üblicherweise durch Erhitzen auf eine Temperatur zwischen 80 und 170°C für eine Zeit von 3 bis 30 min.

Die erfindungsgemäße Mehrschichtlackierung wird vorzugsweise auf Substraten aus Metall und/oder Kunststoff, bevorzugt aus Metall, hergestellt. Diese Substrate können selbstverständlich konversionsbeschichtet sein oder auf andere Weise vorbehandelt sein. So sind metallische Substrate in der Regel konversionsbeschichtet, insbesondere phosphatiert.

Auf die Grundierung werden dann mindestens ein Füller, mindestens ein Basislack und mindestens ein Klarlack aufgetragen, bevorzugt jeweils genau einer der genannten Lacke.

Füller, Basislack und Klarlack werden mittels üblicher Verfahren zur Applikation von flüssigen Beschichtungsmitteln, wie beispielsweise Tauchen, Rakeln, Spritzen, Walzen oder ähnlichem, insbesondere aber mittels Spritzen, appliziert. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air (Heiß-Spritzen). Besonders vorteilhaft ist es, einen Basislack in einem ersten Auftrag durch ESTA und in einem zweiten Auftrag pneumatisch zu applizieren.

Vorzugsweise wird der Füller zumindest teilweise oder vollständig, bevorzugt vollständig, ausgehärtet, bevor Basis- und Klarlack appliziert werden. Die Aushärtung des Füllers erfolgt üblicherweise durch Erhitzen auf eine Temperatur zwischen 80 und 170 °C für eine Zeit von 3 bis 30 min. Der applizierte Basislack wird vorzugsweise kurz abgelüftet oder kurz getrocknet, im Allgemeinen bei einer Temperatur zwischen 20 und kleiner 100°C für eine Zeit von 1 bis 15 min. Danach wird der Klarlack appliziert.

Der applizierte Basislack und der applizierte Klarlack werden bevorzugt gemeinsam thermisch gehärtet. Sofern beispielsweise der Klarlack auch noch mit aktinischer Strahlung härtbar ist, erfolgt noch eine Nachhärtung durch Bestrahlung mit aktinischer Strahlung.

Die Aushärtung kann nach einer gewissen Ruhezeit erfolgen. Sie kann eine Dauer von 30 sec bis 2 h, vorzugsweise 1 min bis 1 h und insbesondere 1 bis 45 min haben. Die Ruhezeit dient beispielsweise dem Verlauf und zur Entgasung der Lackschichten oder zum Verdunsten von flüchtigen Bestandteilen. Die Ruhezeit kann durch die Anwendung erhöhter Temperaturen bis 90°C und/oder durch eine reduzierte Luftfeuchte kleiner 10 g Wasser/kg Luft unterstützt und/oder verkürzt werden, sofern hierbei keine Schädigungen oder Veränderungen der Lackschichten eintreten, etwa eine vorzeitige Vernetzung.

Die Aushärtung erfolgt üblicherweise bei einer Temperatur zwischen 90 und 160°C während einer Zeit von 5 bis 90 min.

Die angegebenen Temperaturen verstehen sich jeweils als Objekttemperaturen des beschichteten Substrats.

Für die Trocknung beziehungsweise Konditionierung der nassen Basislackierung sowie der nassen Klarlackierung werden bevorzugt thermische und/oder Konvektionsverfahren verwendet, wobei übliche und bekannte Vorrichtungen wie Durchlauföfen, NIR- und IR-Heizstrahler, Gebläse und Blastunnel eingesetzt werden. Diese Vorrichtungen können auch miteinander kombiniert werden.

Bei den erfindungsgemäßen Mehrschichtlackierungen weist die Basislackierung im Allgemeinen eine Trockenfilmschichtdicke von bevorzugt 3 bis 40 Mikrometern, insbesondere bevorzugt von 5 bis 30 Mikrometern, und ganz bevorzugt 7 bis 25 Mikrometern auf. Die Klarlackierung kann im Allgemeinen eine Trockenfilmschichtdicke von vorzugsweise 10 bis 60 Mikrometern, darunter bevorzugt bis zu 55 Mikrometern, insbesondere bis zu 45 Mikrometern, ganz besonders bevorzugt bis zu 40 Mikrometern aufweisen. Besonders bevorzugt sind Bereiche von 25 bis 55 Mikrometern, insbesondere von 30 bis 45 Mikrometern und ganz besonders vorteilhaft von 35 bis 40 Mikrometern.

Bei den eingesetzten Grundierungen, Füllern und Klarlacken kann es sich um die dem Fachmann in diesem Zusammenhang bekannten, in der Regel im Handel erhältlichen Beschichtungsmittel handeln. Bei den Klarlacken handelt es sich vorzugsweise um lösemittelbasierte Klarlacke, die bevorzugt einen Festkörperanteil von mindestens 45 % (bei Spritzviskosität) besitzen. Solche Klarlacke werden im Rahmen der Erfindung auch als High-Solid-Klarlacke bezeichnet. Bevorzugte Klarlacke werden weiter unten im Detail beschrieben.

In dem erfindungsgemäßen Verfahren werden also bevorzugt genau ein Basislack (erfindungsgemäßes Beschichtungsmittel) und genau ein Klarlack eingesetzt. Beide Lackschichten werden gemeinsam gehärtet (nass-in-nass-Verfahren).

### Das erfindungsgemäße Beschichtungsmittel

### Melaminharz (A)

Das erfindungsgemäße Beschichtungsmittel enthält mindestens ein Melaminharz (A). Melaminharze sind Polykondensationsharze aus Melamin (1,3,5-Triazin-2,4,6-triamin) und maximal 6 Mol Formaldehyd pro Mol Melamin. Die resultierenden Methylolgruppen können ganz oder teilweise mit einem oder verschiedenen Alkoholen verethert sein. Melaminharze können unterschiedliche Methylolierungsgrade und unterschiedliche Veretherungsgrade aufweisen.

Der Methylolierungsgrad eines Melaminharzes beschreibt, wie viele der möglichen Methylolierungsstellen des Melamins methyloliert sind, d.h. wie viele der insgesamt sechs Wasserstoffatome der primären Aminogruppen des Melamins (d.h. des 1,3,5-Triazin-2,4,6-triamins) durch eine Methylolgruppe ersetzt sind. Ein vollständig methyloliertes, einkerniges Melaminharz weist demzufolge sechs Methylolgruppen pro Triazinring auf, wie beispielsweise Hexamethylolmelamin. Die Methylolgruppen können unabhängig voneinander auch verethert vorliegen.

Unter dem Veretherungsgrad eines Melaminharzes wird der Anteil an Methylolgruppen des Melaminharzes verstanden, der mit einem Alkohol verethert wurde. Bei einem vollständig veretherten Melaminharz sind alle vorhandenen Methylolgruppen nicht frei, sondern mit einem Alkohol verethert. Zur Veretherung sind ein- oder mehrwertige Alkohole geeignet. Bevorzugt werden einwertige Alkohole zur Veretherung eingesetzt. Beispielsweise können Methanol, Ethanol, n-Butanol, i-Butanol oder auch Hexanol zur Veretherung eingesetzt werden. Es können auch Gemische verschiedener Alkohole eingesetzt werden, beispielsweise ein Gemisch aus Methanol und n-Butanol.

Melaminharze können monomer (einkernig) oder oligomer (mehrkernig) vorliegen. Die Angabe "einkernig" bzw. "mehrkernig" bezieht sich auf die Anzahl der Triazinringe pro Molekül Melaminharz. Ein Beispiel für ein einkerniges, vollständig methyloliertes und vollständig mit Butanol verethertes Melaminharz ist Hexamethoxybutylmelamin.

Als Aminoplastharze kommen die im Bereich der Lackindustrie üblicherweise eingesetzten Aminoplastharze zum Einsatz. Bevorzugt werden mit Methanol und/oder Butanol veretherte Melamin-Formaldehyd-Harze, beispielsweise die im Handel unter den Bezeichnungen Cymel®, Resimene®, Maprenal® und Luwipal® erhältlichen Produkte, insbesondere Resimene® 747 und Resimene® 755, eingesetzt.

Der Gehalt von Melaminharzen am erfindungsgemäßen Beschichtungsmittel beträgt vorzugsweise 8 bis 30 Gew.-%, insbesondere bevorzugt 10 bis 28 Gew.-%, ganz besonders bevorzugt 13 bis 26 Gew.-% und in einer sehr vorteilhaften Ausführungsform 15 bis 24 Gew.% jeweils bezogen auf das Gesamtgewicht des Basislacks. Insbesondere durch den Einsatz von Melaminharzanteilen von mindestens 10 Gew.-%, bevorzugt mindestens 13 Gew.-%, ganz besonders bevorzugt mindestens 15 Gew.-% wird eine sehr gute Appearance erreicht. Durch die Kombination von diesen vergleichsweise hohen Melaminharzanteilen mit den weiteren Bestandteilen des erfindungsgemäßen Beschichtungsmittels, insbesondere den modifizierten Organosiloxanen (D), wird dann überraschenderweise trotzdem eine gute Scheibenverklebungshaftung erzielt.

### Pigment (B)

Das erfindungsgemäße Beschichtungsmittel ist pigmentiert und enthält demnach mindestens ein Pigment. Pigmente sind bekanntermaßen pulver- und/oder plättchenförmige Farbmittel, die gängig in Beschichtungsmitteln eingesetzt werden. Vorzugsweise wird das Pigment aus der Gruppe bestehend aus organischen und anorganischen, bevorzugt anorganischen, farbgebenden, effektgebenden, farb- und effektgebenden, magnetisch abschirmenden, elektrisch leitfähigen, korrosionshemmenden, fluoreszierenden und phosphoreszierenden Pigmenten, ausgewählt. Vorzugsweise werden die farb- und/oder effektgebenden Pigmente verwendet.

Besonders bevorzugt enthält das erfindungsgemäße pigmentierte Beschichtungsmittel mindestens ein effektgebendes Pigment, bevorzugt mindestens ein Metallplättchenpigment. Neben dem oder den effektgebenden Pigmenten kann das erfindungsgemäße pigmentierte Beschichtungsmittel auch noch mindestens ein oder mehrere weitere Pigmente, beispielsweise farbgebende Pigmente, enthalten.

Beispiele geeigneter Effektpigmente, die auch farbgebend sein können, sind Metallplättchenpigmente, insbesondere Aluminiumplättchenpigmente, wie handelsübliche Edelstahlbronzen, insbesondere handelsübliche Aluminiumbronzen, sowie nichtmetallische Effektpigmente, wie zum Beispiel Perlglanz- bzw. Interferenzpigmente, plättchenförmige Effektpigmente auf der Basis von Eisenoxid oder flüssigkristalline Effektpigmente. Ergänzend wird auf Römpp Lexikon Lacke und Druckfarben, Seite 176, Stichwort "Effektpigmente" und Seiten 380 und 381, Stichworte "Metalloxid-Glimmer-Pigmente" bis "Metallpigmente" verwiesen.

Insbesondere werden Aluminiumbronzen beziehungsweise Aluminiumplättchenpigmente eingesetzt. Eingesetzt werden dabei sowohl unbehandelte Typen, die beispielsweise unter dem Namen Stapa® Metallux (Firma Eckart) im Handel erhältlich sind, als auch behandelte Typen, insbesondere silanisierte Typen, die beispielsweise in der WO 01/81483 beschrieben sind und beispielsweise unter dem Namen Hydrolan® (Firma Eckart) im Handel erhältlich sind.

Bevorzugt hat das Metallplättchenpigment eine mittlere Teilchengröße von 10 bis 70 und insbesondere von 13 bis 35 Mikrometern (D50-Wert, ISO 13320-1 nach Cilas (Gerät 1064)). Dabei weisen solche Metallplättchenpigment eine Dicke von bevorzugt 200 bis 2000 nm und insbesondere 500 bis 1500 nm, auf (gemessen mittels Rasterelektronenmikroskop). Durch die beiden Analysenmethoden gelingt eine hinreichende Bestimmung der geometrischen Parameter der Teilchen, wobei die Messung der mittleren Teilchengröße eher den Durchmesser der Plättchen widerspiegelt.

Geeignete organische und/oder anorganische farbgebende Pigmente sind die in der Lackindustrie üblicherweise eingesetzten Pigmente.

Beispiele für geeignete anorganische farbgebende Pigmente sind Weißpigmente wie Titandioxid, Zink-Weiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, Stichworte "Eisenblau-Pigmente" bis "Eisenoxidschwarz", Seiten 451 bis 453, Stichworte "Pigmente" bis "Pigmentvolumenkonzentration", Seite 563, Stichwort "Thioindigo-Pigmente", Seite 567, Stichwort "Titandioxid-Pigmente", Seiten 400 und 467, Stichwort "Natürlich vorkommende Pigmente", Seite 459, Stichwort "Polycyclische Pigmente", Seite 52, Stichworte "Azomethinpigmente", "Azopigmente", und Seite 379, Stichwort "Metallkomplex-Pigmente", verwiesen.

Der Gehalt an den Pigmenten kann sehr breit variieren und richtet sich in erster Linie nach der Tiefe der Farbe und/oder der Intensität des Effekts, die eingestellt werden sollen, sowie nach der Dispergierbarkeit der Pigmente in den erfindungsgemäßen pigmentierten Beschichtungsmitteln. Bevorzugt liegt der Anteil an Pigmenten bei 0,5 bis 50 Gew.-%, insbesondere bevorzugt bei 0,5 bis 40 Gew.-%, ganz besonders bevorzugt bei 1 bis 30 Gew.-%, besonders vorteilhaft 2 bis 20 Gew.-%, jeweils bezogen auf das Gesamtgewicht des Beschichtungsmittels.

### Organisches Lösemittel (C)

Das erfindungsgemäße Beschichtungsmittel enthält als lösungsmittelbasiertes Beschichtungsmittel mindestens ein organisches Lösemittel (C).

Als Lösemittel geeignet sind alle üblicherweise in der Lackindustrie eingesetzten Lösemittel, beispielsweise Alkohole, Glykolether, verschiedene Ester, Etherester und Ketone, aliphatische und/oder aromatische Kohlenwasserstoffe, wie beispielsweise Aceton, Methylisobutylketon, Methylethylketon, Butylacetat, 3-Butoxy-2-propanol, Ethylethoxypropionat, Butylglykol, Butylglykolacetat, Butanol, Dipropylenglykolmethylether, Glykolsäurebutylester, Xylol, Toluol, Shellso® T, Pine Oel 90/95, Solventnaphtha®, Shellsol® A, Solvesso™,Benzin 135/180.

Der Gehalt von organischen Lösemitteln am erfindungsgemäßen Beschichtungsmittel beträgt beispielsweise höchstens 65 Gew.-%. Bevorzugt beträgt der Anteil 40 bis 65 Gew.-%, darunter bevorzugt mindestens 45 Gew.-%, insbesondere mindestens 50 Gew.-%, insbesondere vorteilhaft mindestens 55 Gew.-%, jeweils bezogen auf die Gesamtmenge des erfindungsgemäßen pigmentierten Beschichtungsmittels. Besonders bevorzugte Bereiche sind von 40 bis 62 Gew.-%, insbesondere 45 bis 62 Gew.-%, besonders bevorzugt 50 bis 62 Gew.-% und ganz besonders vorteilhaft 55 bis 62 Gew.-%, jeweils bezogen auf die Gesamtmenge des erfindungsgemäßen pigmentierten Beschichtungsmittels. Die bevorzugten Bereiche, insbesondere die Obergrenzen, lassen erkennen, dass das erfindungsgemäße Beschichtungsmittel bevorzugt vergleichsweise geringe Anteile organischer Lösemittel enthält und somit einen vergleichsweise geringen VOC aufweist.

Das erfindungsgemäße Beschichtungsmittel ist zudem lösungsmittelbasiert. Mit lösungsmittelbasierten Beschichtungsmitteln sind solche gemeint, die als Lösemittel organische Lösemittel enthalten. Dies bedeutet, dass bei der Herstellung des Beschichtungsmittels nicht explizit Wasser zugegeben wird, sondern Wasser beispielsweise lediglich als Restanteil oder Verunreinigung von anderen im Beschichtungsmittel vorhandenen Bestandteilen eingeschleppt wird, beispielsweise durch Restanteile Wasser in organischen Lösemitteln. Insbesondere ist mit lösemittelbasiert gemeint, dass der Wasseranteil weniger als 2 Gew.-%, bevorzugt weniger als 1 Gew.-%, jeweils bezogen auf das Gesamtgewicht des Beschichtungsmittels, beträgt. Ganz besonders bevorzugt ist das Beschichtungsmittel wasserfrei.

### Orqanosiloxan (D)

Das erfindungsgemäße Beschichtungsmittel enthält mindestens ein spezielles Organosiloxan der Formel (I): 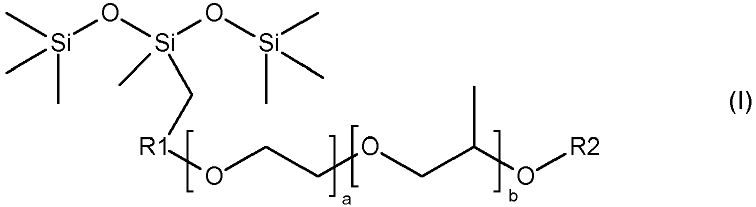 wobei R₁ = CₙH₂ₙ mit n = 1 bis 3, bevorzugt 2; R₂ = H oder CₘH₂ₘ₊₁ mit m = 1 bis 4, bevorzugt H oder CH₃, besonders bevorzugt H; a = 0 bis 20, bevorzugt 2 bis 18, besonders bevorzugt 5 bis 15 und ganz besonders bevorzugt 8 bis 12; b = 0 bis 20, bevorzugt 0 bis 10, besonders bevorzugt 0 bis 5 und ganz besonders bevorzugt 0; a + b = 2 bis 40, bevorzugt 4 bis 20, besonders bevorzugt 6 bis 16 und ganz besonders bevorzugt 8 bis 12 ist. Bevorzugt ist das Verhältnis b/a zwischen 0 und 0,5, insbesondere bevorzugt zwischen 0 und 0,25 und ganz besonders bevorzugt 0. Die angegebenen bevorzugten Gruppen und Bereiche sind jeweils für sich als bevorzugt zu verstehen und nicht nur in Kombination mit weiteren bevorzugten Gruppen und/oder Bereichen. Die Angaben hinsichtlich der Anzahl und Abfolge der Ethylenoxid- und Propylenoxideinheiten in Formel (I) ist der Übersichtlichkeit halber gewählt und selbstverständlich so zu verstehen, dass die Einheiten statistisch verteilt sein können, das heißt insbesondere keine einzelnen Blöcke von Ethylenoxideinheiten und Propylenoxideinheiten vorhanden sein muss.

Durch den Einsatz des mindestens einen Organosiloxans und dessen Kombination mit dem Melaminharz werden die beschriebenen hervorragenden anwendungstechnischen Eigenschaften erreicht, insbesondere eine Balance zwischen guter Scheibenverklebung und Appearance sowie einem niedrigen VOC des erfindungsgemäßen Beschichtungsmittels.

Aus den obigen Bereichsangaben folgt, dass der Einsatz von Organosiloxanen, welche in der Polyetherkette hauptsächlich Ethylenoxideinheiten und nur wenige oder sogar keine Propyleneinheiten enthalten, bevorzugt ist. Auch wenn der Einsatz von Propylenoxideinheiten grundsätzlich möglich ist und sich in Einzelfällen anbieten kann, war besonders überraschend, dass durch den Einsatz solcher Organosiloxane, die in der Polyetherkette hauptsächlich Ethylenoxideinheiten enthalten oder in denen die Polyetherkette aus Ethylenoxideinheiten besteht, die genannten Eigenschaften in einem lösungsmittelbasierten Beschichtungsmittel erhalten werden konnten. Trotz der dann vorliegenden Hydrophilie, eigenen sich diese Organosiloxane hervorragend zum Einsatz in den lösungsmittelbasierten Beschichtungsmitteln. Für ein in diesem Sinne ganz besonders bevorzugtes Polysiloxan (D) gilt R₁ = C₂H₄, R₂ = H; a = 5 bis 15 und b = 0, darunter nochmals bevorzugt a = 8 bis 12.

Organosiloxane der Formel (I) können nach dem Fachmann bekannten Methoden hergestellt werden. Solche Methoden sind beispielsweise in den Patentanmeldungen US 3,989,688, US 4,431,789 oder US 3,505,377, welche Organosiloxane mit ähnlichen oder übereinstimmenden Strukturmerkmalen betreffen, beschrieben. Die Organosiloxane sind als Handelsprodukte erhältlich, beispielsweise unter den Handelsnamen CoatOSil® und Silwet® (Fa. Momentive).

Der Gehalt von speziellen Organosiloxanen am erfindungsgemäßen Beschichtungsmittel beträgt vorzugsweise 0,01 bis 3 Gew.-%, insbesondere bevorzugt 0,02 bis 2 Gew.-%, ganz besonders bevorzugt 0,03 bis 1,5 Gew.-% und in einer besonderen Ausführungsform 0,05 bis 1 Gew.-%.

### Weitere Bestandteile

Das erfindungsgemäße Beschichtungsmittel enthält vorzugsweise neben dem mindestens einen Melaminharz (A) mindestens ein weiteres Polymer (E) als Bindemittel.

Als weitere Bindemittel sind beispielsweise statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze geeignet. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, sowie Seiten 73 und 74, "Bindemittel", verwiesen.

Beispiele geeigneter (Co)Polymerisate sind (Meth)Acrylat(co)polymerisate oder partiell verseifte Polyvinylester, insbesondere (Meth)Acrylatcopolymerisate.

Beispiele geeigneter Polyadditionsharze und/oder Polykondensationsharze sind Polyester, Alkyde, Polyurethane, Polylactone, Polycarbonate, Polyether, Epoxidharz-Amin-Addukte, Polyharnstoffe, Polyamide, Polyimide, Polyester-Polyurethane, Polyether-Polyurethane oder Polyester-Polyether-Polyurethane.

Bevorzugt enthält das Beschichtungsmittel ein hydroxyfunktionelles Polymer (E) als Bindemittel.

Bevorzugt enthält das erfindungsgemäße pigmentierte Beschichtungsmittel mindestens ein Acrylat-Polymer, Polyurethan-Polymer und/oder einen Polyester als weiteres Bindemittel (E). Ganz besonders bevorzugt ist ein Polyester (E) enthalten.

Vorzugsweise enthalten die Polymere (E) als Bindemittel Thio-, Hydroxyl-, N-Methylolamino-N-Alkoxymethylamino-, Imino-, Carbamat-, Allophanat und/oder Carboxylgruppen, bevorzugt Hydroxyl- oder Carboxylgruppen. Ganz besonders bevorzugt sind Hydroxylgruppen. Über diese funktionellen Gruppen, insbesondere die Hydroxylgruppen, kann dann beispielsweise eine Vernetzung mit Komponenten, die weitere funktionelle Gruppen wie vorzugsweise Anhydrid-, Carboxyl-, Epoxy-, blockierte Isocyanat-, Urethan-, Methylol-, Methylolether-, Siloxan-, Carbonat-, Amino, Hydroxy- und/oder beta-Hydroxyalkylamidgruppen enthalten, stattfinden.

Das erfindungsgemäße Beschichtungsmittel ist also bevorzugt thermisch härtbar, das heißt durch chemische Reaktion der beschriebenen reaktiven funktionellen Gruppen kann eine Vernetzung stattfinden (Bildung eines Beschichtungsfilms), wobei die energetische Aktivierung dieser chemischen Reaktion durch thermische Energie möglich ist. Ganz besonders bevorzugt erfolgt eine Vernetzung des mindestens einen Melaminharzes (A) mit Hydroxylgruppen des Bindemittels (E), das heißt das erfindungsgemäße Beschichtungsmittel ist dann thermisch härtbar und fremdvernetzend.

Eine Fremdvernetzung liegt also vor, wenn ein Polymer enthaltend bestimmte funktionelle Gruppen mit einem davon verschiedenen, gegebenenfalls ebenfalls polymeren so genannten Vernetzungsmittel reagiert, wobei dann das Vernetzungsmittel reaktive funktionelle Gruppen enthält, die zu den in dem eingesetzten organischen Polymer vorhandenen reaktiven funktionellen Gruppen komplementär sind. So kann in dieser Hinsicht beispielsweise das Melaminharz (A) als Vernetzungsmittel bezeichnet werden, das über Methylol- und/oder Methylolethergruppen mit dem hydroxyfunktionellen Polymer (E) vernetzt.

Selbstverständlich können auch noch weitere, vom Fachmann regelmäßig als Vernetzungsmittel bezeichnete Komponenten enthalten sein. Beispielhaft seien freie und blockierte Polyisocyanate genannt. Diese können dann auch beispielsweise mit den Melaminharzen und/oder den hydroxyfunktionellen Polymeren (E) vernetzen.

Dies schließt natürlich nicht aus, dass das Beschichtungsmittel beispielsweise anteilig auch selbstvernetzend ist, das heißt die komplementären reaktiven funktionellen Gruppen sind bereits in ein und demselben als Bindemittel eingesetzten Polymer vorhanden. Eine solche anteilige Selbstvernetzung tritt insbesondere auch bei Komponenten auf, die Methylol-, Methylolether- und/oder N-Alkoxymethylaminogruppen enthalten, das heißt beispielsweise bei den Melaminharzen (A).

Auch weitere Härtungsmechanismen, beispielsweise eine anteilige physikalische Härtung (das heißt die Härtung einer Schicht aus einem Beschichtungsmittel durch Verfilmung durch Lösemittelabgabe aus dem Beschichtungsmittel, wobei die Verknüpfung innerhalb der Beschichtung über Schlaufenbildung der Polymermoleküle der Bindemittel), sind natürlich nicht ausgeschlossen.

Bevorzugt ist aber, dass das Beschichtungsmittel durch Einsatz eines hydroxyfunktionellen Polymers (E) als Bindemittel, insbesondere eines Polyesters (E), neben dem Melaminharz (A) jedenfalls fremdvernetzend ist.

Die Funktionalität der Polymere (E) bezüglich der vorstehend beschriebenen reaktiven funktionellen Gruppen kann sehr breit variieren und richtet sich insbesondere nach der Vernetzungsdichte, die man erzielen will, und/oder nach der Funktionalität der jeweils angewandten Vernetzungsmittel. Beispielsweise liegt im Falle der bevorzugten hydroxylfunktionellen Bindemittel (E), insbesondere im Falle der bevorzugten hydroxyfunktionellen Acrylat-Polymere, Polyurethan-Polymere und/oder Polyester, ganz besonders bevorzugt Polyester, die OH-Zahl vorzugsweise bei 15 bis 300, bevorzugt 30 bis 250, besonders bevorzugt 40 bis 200, ganz besonders bevorzugt 50 bis 150 und insbesondere 55 bis 140 mg KOH/g nach DIN 53240.

Die vorstehend beschriebenen komplementären funktionellen Gruppen können nach den üblichen und bekannten Methoden der Polymerchemie in die Bindemittel eingebaut werden. Dies kann beispielsweise durch den Einbau von Monomeren, die entsprechende reaktive funktionelle Gruppen tragen, und/oder mit Hilfe polymeranaloger Reaktionen geschehen.

Geeignete Bindemittel (E), insbesondere die Acrylat-Polymere, Polyurethan-Polymere und/oder Polyester, ganz besonders bevorzugt die Polyester, weisen beispielsweise ein zahlenmittleres Molekulargewicht von 500 bis 10000 g/mol auf, es kann aber auch niedriger oder höher, insbesondere höher, sein. Das gewichtsmittlere Molekulargewicht liegt beispielsweise im Bereich von 2000 bis 20000 g/mol. Die Bestimmung der Molekulargewichtr erfolgt mittels GPC-Analyse mit THF (+0,1% Essigsäure) als Eluent (1 ml/min) auf einer Styrol-Divinylbenzol-Säulenkombination. Die Kalibrierung wird mit Polystyrol-Standards durchgeführt.

Enthalten sein kann ein Acrylat-Polymer (E). Acrylat-Polymere bezeichnet man bekanntermaßen auch als (Meth)Acrylat(co)polymerisate, wobei der Ausdruck (Meth)Acrylat- klarstellt, dass die Polymere Acrylat- und/oder Methacrylat-Monomere enthalten oder aus solchen Monomeren bestehen.

Geeignete Acrylat-Polymere können nach den dem Fachmann bekannten Methoden unter Verwendung der in diesem Zusammenhang bekannten olefinisch ungesättigten Monomere mit reaktiven funktionellen Gruppen (insbesondere Hydroxylgruppen), in der Regel in Kombination mit Monomeren ohne reaktive funktionelle Gruppen, hergestellt werden.

Beispiele geeigneter olefinisch ungesättigter Monomere mit reaktiven funktionellen Gruppen sind:
a) Monomere, welche mindestens eine Hydroxyl-, Amino-, Alkoxymethylamino-, Carbamat-, Allophanat- oder Iminogruppe pro Molekül tragen, wie
   - Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, -fumarat oder -itaconat; oder Hydroxycyclo-alkylester wie 1,4-Bis(hydroxymethyl)cyclohexan-, Octahydro-4,7-methano-1 H-indendimethanol- oder Methylpropandiolmonoacrylat, -monomethacrylat, -monoethacrylat, -monocrotonat, -monomaleinat, -monofumarat oder -monoitaconat; Umsetzungsprodukte aus cyclischen Estern, wie beispielsweise epsilon-Caprolacton und dessen Hydroxyalkyl- oder -cycloalkylestern;
   - olefinisch ungesättigte Alkohole wie Allylalkohol;
   - Polyole wie Trimethylolpropanmono- oder -diallylether oder Pentaerythritmono-, -di- oder -triallylether;
   - Umsetzungsprodukte aus Acrylsäure und/oder Methacrylsäure mit dem Glycidylester einer in alpha-Stellung verzweigten Monocarbonsäure mit 5 bis 18 Kohlenstoff-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 Kohlenstoff-Atomen je Molekül, insbesondere einer Versatic®-Säure, umgesetzt wird;
   - Aminoethylacrylat, Aminoethylmethacrylat, Allylamin oder N-Methyliminoethylacrylat;
   - N,N-Di(methoxymethyl)aminoethylacrylat oder -methacrylat oder N,N-Di(butoxymethyl)aminopropylacrylat oder -methacrylat;
   - (Meth)Acrylsäureamide, wie (Meth)Acrylsäureamid, N-Methyl-, N-Methylol-, N,N-Dimethylol-, N-Methoxymethyl-, N,N-Di(methoxymethyl)-, N-Ethoxymethyl- und/oder N,N-Di(ethoxyethyl)-(meth)-acrylsäureamid;
   - Acryloyloxy- oder Methacryloyloxyethyl-, propyl- oder butylcarbamat oder -allophanat; weitere Beispiele geeigneter Monomere, welche Carbamatgruppen enthalten, werden in den Patentveröffentlichungen U.S. Pat. No. 3.479.328, U.S. Pat. No. 3.674.838, U.S. Pat. No. 4.126.747, U.S. Pat. No. 4.279.833 oder U.S. Pat. No. 4.340.497 beschrieben.
b) Monomere, welche mindestens eine Säuregruppe pro Molekül tragen, wie
   - Acrylsäure, beta-Carboxyethylacrylat, Methacrylsäure, Ethacrylsäure, Crotonsäure, Maleinsäure, Fumarsäure oder Itaconsäure;
   - olefinisch ungesättigte Sulfon- oder Phosphonsäuren oder deren Teilester;
   - Maleinsäuremono(meth)acryloyloxyethylester, Bernsteinsäuremono(meth)acryloyloxyethylester oder Phthalsäuremono(meth)acryloyloxyethylester; oder
   - Vinylbenzoesäure (alle Isomere), alpha-Methylvinylbenzoesäure (alle Isomere) oder Vinylbenzolsulfonsäure (alle Isomere).
c) Epoxidgruppen enthaltende Monomere, wie der Glycidylester der Acrylsäure, Methacrylsäure, Ethacrylsäure, Crotonsäure, Maleinsäure, Fumarsäure oder Itaconsäure oder Allylglycidylether.

Höherfunktionelle Monomere der vorstehend beschriebenen Art werden im Allgemeinen nicht oder nur in untergeordneten Mengen eingesetzt. Im Rahmen der vorliegenden Erfindung sind unter untergeordneten Mengen an höherfunktionellen Monomeren solche Mengen zu verstehen, welche nicht zur Vernetzung oder Gelierung der Copolymerisate, insbesondere der (Meth)Acrylatcopolymerisate, führen.

Beispiele geeigneter olefinisch ungesättigter Monomere ohne reaktive funktionelle Gruppen sind unter anderem Alkylester der Acrylsäure, Methacrylsäure oder einer anderen alpha,beta-olefinisch ungesättigten Carbonsäure, vinylaromatische Verbindungen sowie Mischungen dieser Monomeren.

Die ebenfalls als Polymere (E) einsetzbaren Polyurethan-Polymere werden beispielsweise in dem Fachmann bekannter Weise erhalten durch Umsetzung
- mindestens eines Polyols, ausgewählt aus der Gruppe, bestehend aus Polyester- und Polyetherpolyolen, bevorzugt mit einem zahlenmittleren Molekulargewicht von 10000 bis 20000 g/mol, und
- mindestens eines Polyisocyanats sowie
- gegebenenfalls mindestens einer Verbindung, enthaltend mindestens eine isocyanatreaktive funktionelle Gruppe und mindestens eine (potentiell) anionische Gruppe im Molekül,
- gegebenenfalls mindestens einer weiteren Verbindung, enthaltend mindestens eine isocyanatreaktive funktionelle Gruppe und
- gegebenenfalls mindestens einer Verbindung eines zahlenmittleren Molekulargewichts von 60 bis 600 g/mol, enthaltend Hydroxyl- und/oder Aminogruppen im Molekül.

Derartige Polyurethan-Polymere sind beispielsweise in den europäischen Patentanmeldungen EP 228003 und EP 574417 beschrieben.

Derartige Polyurethan-Polymere werden beispielsweise erhalten, indem als Isocyanat-Komponente im Bereich der Lackindustrie üblicherweise eingesetzte Isocyanate, wie z.B. Hexamethylendiisocyanat, Octamethylendiisocyanat, Decamethylendiisocyanat, Dodecamethylendiisocyanat, Tetradecamethylendiisocyanat, Trimethylhexan-diisocyanat, Tetramethyl-hexandiisocyanat, Isophorondiisocyanat, 2-Isocyanato-propylcyclohexyl-isocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4- oder 1,3- oder 1,2-Diisocyanatocyclohexan, 2,4- oder 2,6-Diisocyanato-1-methylcyclohexan, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethyl-heptan oder 1-lsocyanato-2-(3-isocyanatopropyl)-cyclohexan oder Tetramethylxylylendiisocyanaten (TMXDI) oder Mischungen aus diesen Polyisocyanaten, bevorzugt Tetramethylxylylen-diisocyanat (TMXDI) und/oder Isophorondiisocyanat, bevorzugt Isophorondiisocyanat, verwendet werden.

Als Kettenverlängerungsmittel mit Hydroxyl- bzw. Aminogruppen werden bevorzugt Trimethylolpropan und Diethanolamin eingesetzt.

Ebenfalls als Polyurethanharze (E) sind sogenannte acrylierte Polyurethanharze geeignet, die in dem Fachmann bekannter Weise erhältlich sind, indem ethylenisch ungesättigte Monomere in Gegenwart eines Polyurethanharzes polymerisiert werden. Dabei ist es möglich, Polyurethanharze ohne Doppelbindungen und/oder Polyurethanharze mit Doppelbindungen einzusetzen.

Als Bindemittel können auch acrylierte Polyurethanharze mit seitenständigen und/oder endständigen Doppelbindungen, insbesondere mit seiten- und/oder endständigen Ethenylarylengruppen, eingesetzt werden.

Die acrylierten Polyurethanharze mit seitenständigen und/oder endständigen Doppelbindungen können erhalten werden durch Umsetzung eines Polyurethanpräpolymers, das mindestens eine freie Isocyanatgruppe enthält, mit einer Verbindung, die mindestens eine ethylenisch ungesättigte Doppelbindung und eine gegenüber NCO-Gruppen reaktive Gruppe, insbesondere eine Hydroxylgruppe oder eine Aminogruppe, aufweist.

Die acrylierten Polyurethanharze mit seitenständigen und/oder endständigen Doppelbindungen können auch erhalten werden durch Umsetzung eines Polyurethanpräpolymers, das mindestens eine gegenüber NCO-Gruppen reaktive Gruppe, insbesondere mindestens eine Hydroxylgruppe oder eine Aminogruppe, enthält, mit einer Verbindung, die mindestens eine ethylenisch ungesättigte Doppelbindung und eine freie Isocyanatgruppe aufweist.

Als Bindemittel-Polymere (E) können außerdem Propfmischpolymerisate, die erhältlich sind durch Polymerisation von olefinisch ungesättigten Monomeren in Gegenwart der acrylierten Polyurethanharze mit seitenständigen und/oder endständigen Doppelbindungen, eingesetzt werden.

Insbesondere werden Pfropfmischpolymerisate, die einen hydrophoben Kern aus mindestens einem einpolymerisierten olefinisch ungesättigten Monomeren und eine hydrophile Schale aus mindestens einem hydrophilen acrylierten Polyurethan umfassen, eingesetzt. Geeignet sind aber auch Pfropfmischpolymerisate, die einen hydrophoben Kern aus mindestens einem hydrophoben acrylierten Polyurethan und eine hydrophile Schale aus mindestens einem einpolymerisierten olefinisch ungesättigten Monomeren umfassen.

Geeignete acrylierte Polyurethanharze sowie daraus hergestellte Propfmischpolymerisate sind beispielsweise in der WO 01/25307. Seite 5, Zeile 14, bis Seite 45, Zeile 4, und der EP-B-787 159, Seite 2, Zeile 27, bis Seite 7, Zeile 13, beschrieben.

Die ebenfalls als Polymere (E) geeigneten und im Rahmen der vorliegenden Erfindung bevorzugten Polyester können gesättigt oder ungesättigt, insbesondere gesättigt sein. Solche Polyester und deren Herstellung sowie die bei dieser Herstellung einsetzbare Komponenten sind dem Fachmann bekannt und werden beispielsweise in der EP-B-787 159 beschrieben.

Es handelt sich insbesondere um Polymere, die unter Einsatz mehrwertiger organischer Polyole und mehrwertiger organischer Carbonsäuren hergestellt werden. Die Polyole und Polycarbonsäuren werden dabei durch Veresterung, das heißt also durch Kondensationsreaktionen, miteinander verknüpft. Entsprechend werden die Polyester in der Regel der Gruppe der Polykondensationsharze zugeordnet. Je nach Art, Funktionalität und eingesetzten Anteilen und Verhältnissen der Ausgangskomponenten werden dabei beispielsweise lineare oder verzweigte Produkte erhalten. Während lineare Produkte vornehmlich beim Einsatz von difunktionellen Ausgangskomponenten (Diole, Dicarbonsäuren) entstehen, wird beispielsweise durch den Einsatz von höherfunktionellen Alkoholen (OH-Funktionalität, das heißt Anzahl OH-Gruppen pro Molekül, größer 2) eine Verzweigung erreicht. Natürlich ist bei der Herstellung auch der anteilige Einsatz von monofunktionellen Komponenten, beispielsweise Monocarbonsäuren, möglich. Zur Herstellung von Polyestern können bekanntermaßen auch statt oder neben den entsprechenden organischen Carbonsäuren, die Anhydride der Carbonsäuren, insbesondere die Anhydride der Dicarbonsäuren, eingesetzt werden. Ebenfalls möglich ist die Herstellung durch den Einsatz von Hydroxycarbonsäuren oder den von den Hydroxycarbonsäuren durch intramolekulare Veresterung abgeleiteten Lactonen.

Geeignete Diole sind beispielsweise Glykole, wie Ethylenglykol, Propylenglykol, Butylenglykol, Butandiol-1,4, Hexandiol-1,6, Neopentylglykol, und andere Diole, wie 1,4-Dimethylolcyclohexan oder 2-Butyl-2-Ethyl-1,3-Propandiol.

Geeignete höherfunktionelle Alkohole (OH-Funktionalität größer 2) sind beispielsweise Trimethylolpropan, Glycerin und Pentaerythrit.

Die Säurekomponente eines Polyesters umfasst in der Regel Dicarbonsäuren oder ihre Anhydride mit 2 bis 44, bevorzugt 4 bis 36 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden. Es können auch höherfunktionelle Carbonsäuren mit 3 oder mehr Carboxylgruppen (beziehungsweise die entsprechenden Anhydride), beispielsweise Trimellithsäureanhydrid eingesetzt werden. Häufig werden auch anteilig Monocarbonsäuren, wie beispielsweise ungesättigte Fettsäuren, verwendet.

Einsetzbare Hydroxycarbonsäuren sind beispielsweise Hydroxycapronsäure, Hydroxybuttersäure, Hydroxydecansäure und/oder 12-Hydroxystearinsäure. Einsetzbare Lactone sind beispielsweise die an sich bekannten beta-, gamma-, delta- und epsilon-Lactone, insbesondere epsilon-Caprolacton.

Neben den oben beschriebenen monomeren Verbindungen können beispielsweise auch bereits polymere Ausgangsprodukte eingesetzt werden, beispielsweise als Diole die an sich bekannten Polyesterdiole, die durch Umsetzung eines Lactons mit einem zweiwertigen Alkohol erhalten werden.

Die beschriebenen bevorzugten Polymere (E) als Bindemittel, das heißt die Acrylat-Polymere, Polyurethan-Polymere und/oder Polyester, können für sich oder auch in Kombination miteinander in dem erfindungsgemäßen Beschichtungsmittel eingesetzt werden.

Neben den Acrylat-Polymeren, Polyurethan-Polymeren und/oder Polyestern (E) können auch weitere Polymere als Bindemittel eingesetzt werden. Entsprechende, im Bereich der Automobilindustrie in pigmentierten Lacken, insbesondere Basislacken, üblicherweise eingesetzte Bindemittel sind dem Fachmann bekannt und können von diesem problemlos ausgewählt werden.

Beispielhaft werden partiell verseifte Polyvinylester als weitere statistisch, alternierend und/oder blockartig aufgebaute lineare und/oder verzweigte und/oder kammartig aufgebaute (Co)Polymerisate von ethylenisch ungesättigten Monomeren genannt. Als weitere Polyadditionsharze und Polykondensationsharze werden beispielhaft Alkyde, Polylactone, Polycarbonate, Polyether, Epoxidharz-Amin-Addukte, Polyharnstoffe, Polyamide oder Polyimide genannt.

Der Gehalt von weiteren Bindemitteln (E), insbesondere Acrylat-Polymeren, Polyurethan-Polymeren und/oder Polyestern, ganz besonders bevorzugt Polyestern, beträgt bevorzugt 6 bis 30 Gew.-%, insbesondere bevorzugt 8 bis 25 Gew.-%, ganz besonders bevorzugt 10 bis 20 Gew.-% und in einer besonderen Ausführungsform 12 bis 18 Gew.-%, jeweils bezogen auf die Gesamtmenge des erfindungsgemäßen beschichtungsmittels.

Vorteilhafterweise können in den erfindungsgemäßen Beschichtungsmitteln noch Polymermikroteilchen (M) eingesetzt werden. Geeignete Polymermikroteilchen sind beispielsweise in der EP-A-480 959, Seite 3, Zeile 36, bis Seite 4, Zeile 35, der WO 96/24619, der WO 99/42529, der EP-B-1 173 491, EP-B-1 185 568, WO 03/089487, WO 03/089477, WO 01/72909 und WO 99/42531 beschrieben. Die Polymermikroteilchen können insbesondere zur Steuerung des Verlaufs, des Abdunstverhaltens und des Anlöseverhaltens durch den Klarlack eingesetzt werden.

Geeignete Polymermikroteilchen weisen üblicherweise ein zahlenmittleres Molekulargewicht von 2000 bis 100000 g/mol auf. Die Bestimmung des Molekulargewichts erfolgt mittels GPC-Analyse mit THF (+ 0,1% Essigsäure) als Eluent (1 ml/min) auf einer Styrol-Divinylbenzol-Säulenkombination. Die Kalibrierung wird mit Polystyrol-Standards durchgeführt.

Geeignete Polymermikroteilchen weisen außerdem üblicherweise eine mittlere Teilchengröße von 0,01 bis 10 µm, insbesondere von 0,01 bis 5 µm, und ganz besonders bevorzugt von 0,02 bis 2 µm, nach ISO 13320-1 auf.
Besonders bevorzugt eingesetzte Polymermikroteilchen weisen reaktive funktionelle Gruppen auf, die mit den funktionellen Gruppen des Vernetzungsmittels reagieren können. Insbesondere weisen die Polymermikroteilchen dabei Hydroxylgruppen auf. Hierbei weisen die Polymermikroteilchen bevorzugt eine Hydroxylzahl von 5 bis 150 mg KOH/g nach DIN 53240 auf. Hydroxylgruppenhaltige Polymermikroteilchen sind beispielsweise in der WO 01/72909 beschrieben.

Vernetzte Polymermikroteilchen sind beispielsweise dadurch erhältlich, indem ein Gemisch aus:
(a) einem ethylenisch ungesättigten Monomeren, das eine ethylenisch ungesättigte Gruppe pro Molekül enthält oder ein Gemisch aus solchen Monomeren und
(b) einem ethylenisch ungesättigten Monomeren, das mindestens zwei ethylenisch ungesättigte Gruppen pro Molekül enthält oder ein Gemisch aus solchen Monomeren in einer wässrigen Phase gegebenenfalls in Gegenwart von Emulgatoren oder gegebenenfalls in Gegenwart eines Trägerharzes, bevorzugt einem Polyester, polymerisiert und die auf diese Weise erhaltene wässrige Polymermikroteilchendispersion anschließend in ein organisches Lösemittel oder ein Gemisch aus organischen Lösemitteln überführt wird.

Bevorzugt sind Polymermikroteilchen, die unter Verwendung von ionischen und/oder polaren Gruppen, vorzugsweise Hydroxylgruppen und/oder Carboxylgruppen, enthaltenden Komponenten hergestellt worden sind. Die Komponenten (a) und (b) sollen in der Regel zwischen 1 und 20 Gew.-%, bevorzugt zwischen 3 und 15 Gew.-% ionische und/oder polare Gruppen enthalten.

Um ausreichend vernetzte Polymermikroteilchen zu erhalten, reicht es in der Regel aus, auf ein Mol der Komponente (a) 0,25 bis 1,2 Mol, bevorzugt 0,3 bis 1 Mol der Komponente (b) einzusetzen.

Die in den Beschichtungsmitteln eingesetzten Polymermikroteilchen (M) können aber auch direkt in organischer Phase hergestellt werden.

Bevorzugt eingesetzte Polymermikroteilchen sind beispielsweise dadurch erhältlich, indem ein Gemisch aus:
(c) einem ethylenisch ungesättigten Monomeren (M1), das mindestens eine reaktive Gruppe (G1) pro Molekül enthält oder ein Gemisch aus solchen Monomeren (M1) und
(d) gegebenenfalls einem ethylenisch ungesättigten Monomeren (M2), das mindestens eine, von (G1) verschiedene, reaktive Gruppe (G2) pro Molekül enthält oder ein Gemisch aus solchen Monomeren (M2) und
(e) gegebenenfalls einem weiteren ethylenisch ungesättigten Monomeren (M3) oder ein Gemisch aus solchen Monomeren (M3)
einer Polymerisation in einem organischen Lösemittel gegebenenfalls in Gegenwart eines Trägerharzes, bevorzugt einem Polyester, unterworfen wird.

Geeignete Monomere (M1) sind beispielsweise Monomere, die Hydroxylgruppen, Carbamatgruppen, Aminogruppen, Alkoxymethyl-aminogruppen, Allophanatgruppen oder Iminogruppen, insbesondere Hydroxylgruppen, als reaktive Gruppen enthalten.

Die Monomeren (M1) mit den reaktiven Gruppen (G1) können dabei auch durch Reaktion zweier Verbindungen, von denen eine erste Verbindung eine reaktive Gruppe und mindestens eine ethylenisch ungesättigte Doppelbindung und die andere Verbindung eine mit den reaktiven Gruppen der ersten Verbindung reaktive Gruppe und gegebenenfalls eine ethylenisch ungesättigte Doppelbindung aufweist, hergestellt werden.

Geeignete Monomere (M2) sind beispielsweise Monomere, die Carboxylgruppen enthalten.

Geeignete Monomere (M3) sind die üblicherweise eingesetzten, sogenannten Neutralmonomere, also ethylenisch ungesättigte Monomere, die keine reaktiven Gruppen aufweisen.

Aus Obigem folgt, dass es sich bei den polymeren Mikroteilchen auch um Polymere handelt, die ebenfalls zur Filmbildung beitragen können, insbesondere durch Fremdvernetzung mit den Melaminharzen. Es handelt sich demnach ebenfalls um Bindemittelkomponenten. Aufgrund ihres jedenfalls vorhandenen Teilchencharakters, insbesondere den wie oben beschrieben messbaren Teilchengrößen, werden sie aber im Rahmen der vorliegenden Erfindung getrennt von den Bindemitteln (E) betrachtet. Dies schließt natürlich nicht aus, dass auch die Bindemittel (E) in bestimmten Lösemitteln aggregierte Teilchen und/oder Mikroteilchen bilden können.

Die Polymermikroteilchen (M) können in den erfindungsgemäßen Beschichtungsmitteln beispielsweise in einer Menge von 3 bis 30 Gew.-%, insbesondere von 4 bis 20 Gew.-%, jeweils bezogen auf das Gesamtgewicht des Basislacks, eingesetzt werden.

Außer den vorstehend beschriebenen Komponenten kann das erfindungsgemäße Beschichtungsmittel übliche und bekannte Hilfs- und Zusatzstoffe in üblichen Mengen enthalten, bevorzugt 0,5 bis 40 Gew.-% und besonders bevorzugt 0,5 bis 30 Gew.-%, insbesondere 0,5 bis 15 Gew.-%, jeweils bezogen auf das Gesamtgewicht des jeweiligen Beschichtungsmittels.

Beispiele für geeignete Hilfs- und Zusatzstoffe sind organische und anorganische Füllstoffe, beispielsweise Talkum oder pyrogene Kieselsäuren, und/oder weitere übliche Hilfs- und Zusatzstoffe, wie beispielsweise Antioxidantien, Entlüftungsmittel, Netzmittel, Katalysatoren, Dispergiermittel, Emulgatoren, Rheologiehilfsmittel wie Verlaufsmittel, Verdickungsmittel, Antiablaufmittel und Thixotropiermittel, Wachse, Slipadditive, Reaktivverdünner, Rieselhilfen, Sikkative, Bioziden, Additive zur Verbesserung der Untergrundbenetzung, Additive zur Verbesserung der Oberflächenglätte, Mattierungsmittel, Radikalfänger, Lichtschutzmittel, vorzugsweise die oben beschriebenen UV-Absorber mit einem Absorptionsmaximum unter 370 nm und/oder HALS, Korrosionsinhibitoren, Flammschutzmittel oder Polymerisationsinhibitoren, wie sie in dem Buch "Lackadditive" von Johan Bieleman, Wiley-VCH, Weinheim, New York, 1998, im Detail beschrieben werden. Bevorzugte Hilfs- und Zusatzstoffe sind Rheologiehilfsmittel, Entlüftungsmittel, Netzmittel, Dispergiermittel, UV-Absorber und Radikalfänger. Besonders bevorzugte Hilfs- und Zusatzstoffe sind UV-Absorber und Netzmittel sowie Füllstoffe, unter denen pyrogene Kieselsäuren bevorzugt sind.

Der Festkörpergehalt des Beschichtungsmittels beträgt mindestens 35 %, bevorzugt 35 bis 60 %, darunter bevorzugt bis zu 55 %, insbesondere bis zu 50 % und besonders vorteilhaft bis zu 45 %. Besonders bevorzugt Bereiche sind von 38 bis 60 %, insbesondere 38 bis 55 %, besonders bevorzugt 38 bis 50 % und ganz besonders vorteilhaft 38 bis 45 %.

Der Festkörpergehalt wird im Rahmen der vorliegenden Erfindung, sofern nichts anderes angegeben ist, nach DIN ISO 3251 mit einer Einwaage von 1,0 g Probe, beispielsweise 1,0 g des erfindungsgemäßen Beschichtungsmittels, bei einer Prüfdauer von 60 min und bei einer Temperatur von 125 °C bestimmt.

Diese Prüfmethode wird ebenfalls angewandt, um beispielsweise den Anteil verschiedener Komponenten des Beschichtungsmittels an der Gesamtzusammensetzung zu bestimmen. So kann beispielsweise der Festkörper einer Bindemitteldispersion eines Polymers (E), welche dem Beschichtungsmittel zugegeben wird, entsprechend bestimmt werden, um den Anteil dieses Polymers (E) an der Gesamtkomposition zu ermitteln.

Unter den genannten Bedingungen, das heißt bei den genannten Festkörpergehalten, weisen bevorzugte erfindungsgemäße pigmentierte Beschichtungsmittel bei 23°C eine Viskosität von 16 s bis 35 s und besonders bevorzugt 20 bis 28 s Auslaufzeit im Ford 3 Cup auf. Im Rahmen der vorliegenden Erfindung wird eine Viskosität in diesem Bereich als Spritzviskosität (Verarbeitungsviskosität) bezeichnet. Bekanntermaßen werden Beschichtungsmittel bei Spritzviskosität appliziert, das heißt sie besitzen unter den dann vorliegenden Bedingungen eine Viskosität, die insbesondere nicht zu hoch ist, um eine effektive Applikation zu ermöglichen. Dies bedeutet, dass die Einstellung der Spritzviskosität wichtig ist, um einen Lack überhaupt durch Spritzverfahren applizieren zu können und um zu gewährleisten, dass sich auf dem zu beschichtenden Substrat ein vollständiger, gleichmäßiger Beschichtungsfilm ausbilden kann. Es ist von besonderem Vorteil, dass der erfindungsgemäße Beschichtungsstoff bei Spritzviskosität einen hohen Festkörper besitzt, sodass keine weitere Verdünnung mit umweltschädlichen organischen Lösemitteln notwendig ist. Die bevorzugten Bereiche des Festköpergehalts, insbesondere die Untergrenzen, lassen also erkennen, dass das erfindungsgemäße Beschichtungsmittel im applikationsfähigem, Zustand bevorzugt vergleichsweise hohe Festkörpergehalte aufweist (high-solid-Systeme) und somit einen vergleichsweise geringen VOC aufweist.

### Weitere Beschichtungsmittel zur Herstellung der erfindungsgemäßen Mehrschichtlackierung

### Klarlack

Wie oben angegeben, wird zur Herstellung der erfindungsgemäßen Mehrschichtlackierung das erfindungsgemäße Beschichtungsmittel als Basislack eingesetzt und dann auf der Basislackschicht, bevorzugt auf der noch nicht ausgehärteten Basislackschicht, ein Klarlack aufgebracht (Nass-in-Nass). Auf diese Weise erhält man dann die erfindungsgemäße Mehrschichtlackierung umfassend mindestens eine Basislackierung und mindestens eine Klarlackierung. Bevorzugt ist von jeder Lackierung genau eine vorhanden.

Zur Herstellung der Klarlackierung der erfindungsgemäßen Mehrschichtlackierung sind als Klarlacke beispielsweise üblicherweise eingesetzten transparenten Beschichtungsmittel enthaltend Melaminharze geeignet. Beispielsweise sind Klarlacke geeignet, die einen Melaminharzanteil von kleiner 20 Gew.-%, bezogen auf den Festkörpergehalt des transparenten Beschichtungsmittels, besitzen. Es handelt sich dabei um wässrige oder lösemittelhaltige transparente Beschichtungsmittel, die sowohl als Einkomponenten- als auch als Zwei- oder Mehrkomponenten-Beschichtungsmittel formuliert sein können. Geeignet sind ferner auch Pulverslurry-Klarlacke. Bevorzugt sind lösungsmittelbasierte Klarlacke, das heißt solche, die zumindest ein organisches Lösemittel enthalten (zur Definition von "lösungsmittelbasiert" siehe oben).

Geeignete transparente Beschichtungsmittel sind beispielsweise in der WO 03/050194 A1, in der US 2008/076868 A1 und in der WO 06/063304 A1 beschrieben. Bevorzugt werden carbamatgruppenhaltige transparente Beschichtungsmittel eingesetzt, das heißt Klarlacke, die carbamatfunktionelle Polymere als Bindemittel enthalten.

Bevorzugt weisen die transparenten Beschichtungsmittel (Klarlacke) einen Festkörpergehalt von mindestens 45 %, bevorzugt mindestens 47 % bei Spritzviskosität auf und sind lösemittelbasiert (zur Definition von Spritzviskosität und Festkörpergehalt siehe oben). Bevorzugte Bereiche des Festkörpergehalts sind von 45 bis 60 %, bevorzugt 47 bis 58 %.

Die eingesetzten transparenten Beschichtungsmittel können thermisch und/oder mittels Strahlung wie insbesondere mittels UV-Strahlung, härtbar sein.

Die transparenten Beschichtungsmittel enthalten üblicherweise mindestens ein Bindemittel mit funktionellen Gruppen sowie mindestens einen Vernetzer mit einer zu den funktionellen Gruppen des Bindemittels komplementärer Funktionalität. Beispiele für solche komplementären Funktionalitäten sind beispielsweise die folgenden zueinander jeweils komplementären Paare (a / b): (Carboxyl / Epoxy), (Amin oder Thiol oder Hydroxyl / blockiertes oder freies Isocyanat oder alkoxylierte Aminogruppen oder umesterungsfähige Gruppen), ((Meth)Acryloyl / CH-acide oder Amin oder Hydroxyl oder Thiol), (Carbamat / alkoxylierte Aminogruppen) und ((Meth)Acryloyl / (Meth)Acryloyl).

Eingesetzt werden bevorzugt lösemittelhaltige transparente Beschichtungsmittel auf Basis von Polyurethanharzen und/oder Polyacrylatharzen und/oder Polyesterharzen, bevorzugt mit Hydroxyl-, Amino-, Carbamat-, Carboxyl-, (Meth)acryloyl- und/oder Thiolgruppen in Kombination mit den entsprechenden Vernetzern, insbesondere in Kombination mit Isocyanaten, Aminoplastharzen und/oder Anhydriden. Solche Systeme sind also thermisch härtbar und fremdvernetzend.

Besonders bevorzugt eingesetzt werden lösemittelbasierte Einkomponenten Klarlacke mit Festkörpergehalten von mindestens 45 %, bevorzugt mindestens 47 %, welche thermisch härtbar und fremdvernetzend sind. Dabei werden bevorzugt Polyurethanharze und/oder Polyacrylatharze und/oder Polyester als Bindemittel eingesetzt, wobei diese Bindemittel insbesondere Hydroxyl- und/oder Carbamatgruppen aufweisen. In Kombination mit diesen Bindemitteln werden bevorzugt Melaminharze als Vernetzungsmittel eingesetzt, welche wie bereits oben beschrieben insbesondere Methylol- und Methylolethergruppen aufweisen.

Neben dem Bindemittel und Vernetzer enthalten die Klarlacke übliche Hilfs- und Zusatzstoffe, wie beispielsweise Katalysatoren für die Vernetzung, Entschäumer, Haftvermittler, Additive zur Verbesserung der Untergrundbenetzung, Additive zur Verbesserung der Oberflächenglätte, Mattierungsmittel, Lichtschutzmittel, vorzugsweise UV-Absorber mit einem Absorptionsmaximum unter 370 nm und/oder HALS, Korrosionsinhibitoren, Biozide, Flammschutzmittel oder Polymerisationsinhibitoren, wie sie in dem Buch "Lackadditive" von Johan Bieleman, Wiley-VCH, Weinheim, New York, 1998, im Detail beschrieben werden.

In einer speziellen Ausführungsform enthält auch der Klarlack das Organosiloxan (D). Der Gehalt von speziellen Organosiloxanen am Klarlack beträgt vorzugsweise 0,01 bis 4 Gew.-%, insbesondere bevorzugt 0,05 bis 3 Gew.-% und ganz besonders bevorzugt 0,1 bis 2,5 Gew.-%. Ein besonderer Vorteil der vorliegenden Erfindung ist aber, dass im Klarlack auf den Einsatz des Organosiloxans verzichtet werden kann. Auch wenn sich in Einzelfällen der Einsatz im Klarlack anbieten kann, wird auch ohne diesen Einsatz ein hervorragendes Eigenschaftsprofil hinsichtlich Appearance und Scheibenverklebungshaftung erreicht.

Bei den zur Herstellung der erfindungsgemäßen Mehrschichtlackierung ebenfalls einsetzbaren weiteren Beschichtungsmittel, insbesondere Grundierungen und Füller, handelt es sich um die dem Fachmann in diesem Zusammenhang bekannten, regelmäßig im Handel erhältlichen Beschichtungsmittel.

### Herstellung der erfindungsgemäßen Mehrschichtbeschichtung

Zur Herstellung der Mehrschichtbeschichtung wird auf die erfindungsgemäße Mehrschichtlackierung eine Klebstoffschicht, insbesondere aus einem feuchtigkeitshärtenden, isocyanat-basierten Klebstoff, aufgebracht. Wie oben beschrieben, besitzt die erfindungsgemäße Mehrschichtlackierung eine hervorragende Scheibenverklebungshaftung, das heißt der Klebstoff haftet sehr gut auf der Mehrschichtlackierung. Die Klebstoffschicht befindet sich unmittelbar auf der Klarlackierung, welche die oberste Schicht der Mehrschichtlackierung bildet. Somit befindet sich in dem Fall einer aufgetragenen Klebstoffschicht insbesondere keine Zwischenschicht aus Haftprimer zwischen der Mehrschichtlackierung und der Klebstoffschicht.

Zur Herstellung der Klebstoffschicht wird ein feuchtigkeitshärtender, isocyanat-basierter Klebstoff unmittelbar, das heißt ohne weitere Zwischenschicht, auf die oberste Klarlackschicht der ausgehärteten, abgekühlten Mehrschichtlackierung aufgebracht. Der feuchtigkeitshärtende, isocyanat-basierte Klebstoff kann mittels der üblichen und geeigneten Verfahren, wie beispielsweise Spritzen, und in den üblichen Klebstoffschichtdicken von 0,1 bis 5 mm appliziert werden.

Geeignete Klebstoffe werden zum Beispiel in der Patentschrift US 5852137 beschrieben. Insbesondere geeignet sind die üblicherweise für die Verklebung von Windschutzscheiben eingesetzten, feuchtigkeitshärtenden, isocyanat-basierten Klebstoffe. Solche Klebstoffe können zum Beispiel unter der Bezeichnung "Betaseal®" von der Firma Dow Automotive im Handel erhalten werden. Feuchtigkeitshärtende, isocyanat-basierte Klebstoffe (Polyurethan-Klebstoffe) können im Allgemeinen als Einkomponenten-Klebstoffe oder auch als Zweikomponenten-Klebstoffe eingesetzt werden. Besonders bevorzugt werden feuchtigkeitshärtende, isocyanat-basierte Einkomponenten-Klebstoffe eingesetzt.

Darauf folgend kann dann die Verklebung einer Glasscheibe auf der Mehrschichtbeschichtung erfolgen, das heißt also die erfindungsgemäße Verwendung stattfinden.

Unter "Verklebung" wird das auf Dauer angelegte Befestigen einer Glasscheibe auf oder an dem Substrat mittels der erfindungsgemäßen Mehrschichtbeschichtung verstanden.

Als Glasscheiben kommen alle üblichen und bekannten Glasscheiben in Frage. Bevorzugt handelt es sich bei der Glasscheibe um eine Windschutzscheibe.

Bei Schritt (3) der erfindungsgemäßen Verwendung (Aufbringen einer Glasscheibe auf die Klebstoffschicht und anschließende Aushärtung des Klebstoffs) kann wie folgt vorgegangen werden. Die gereinigte Glasscheibe wird auf die frisch applizierte Klebstoffschicht aufgebracht, fixiert und angedrückt. Die Aushärtung des Klebstoffs kann bei einer ausreichenden Luftfeuchte bei Raumtemperatur durchgeführt werden. Die Aushärtung des Klebstoffs kann beispielsweise bei einer Luftfeuchtigkeit von 50% relativer Feuchte und einer Temperatur von 25°C über 72 h erfolgen.

Im Folgenden wird die Erfindung anhand von Beispielen weiter erläutert.

### Beispiele

### 1. Herstellung der erfindungsgemäßen und Vergleichs-Basislacke

Der erfindungsgemäße Basislack 1 und die Vergleichs-Basislacke V-2 und V-3 wurden wie folgt hergestellt.

### 1.1 Herstellung eines Polyesters (E) als Bindemittel

In einem 2L-Vierhalskolben mit Rührer, elektrischer Widerstandsheizung, Thermometer, Füllkörperkolonne gefüllt mit Pall-Ringen, ausgestattet mit Kopfthermometer, Destillationsbrücke, Kondensatkühler und Vorlage werden eingewogen 81,0 Gew.-Teile 1,6-Hexandiol, 108,0 Gew.-Teile Neopentylglykol, 28,0 Gew.-Teile Glyzerin, 38,0 Gew.-Teile Trimethylolpropan, 99,0 Gew.-Teile Adipinsäure, 157,0 Gew.-Teile Phthalsäureanhydrid und 125,0 Gew.-Teile Isophthalsäure. Das Reaktionsgemisch wird unter Rühren schnell auf 160 °C erhitzt und 30 min auf 160°C gehalten. Von 160 °C wird die Temperatur innerhalb 1,5 Stunden auf 190 °C so gesteigert, dass die Kolonnen-Kopftemperatur 103 °C nicht übersteigt. Dann wird auf 150 °C abgekühlt und es werden 63,0 Gew.-Teile Cardura™ E 10 P und 7,0 Gew.-Teile Xylol zugegeben und anschließend wird erhitzt und eine Stunde bei 165 °C gehalten. Dann wird auf 230°C erhitzt und auf 230°C gehalten, bis die Säurezahl einen Wert von 10 mg KOH/g (gemessen nach DIN EN ISO 2114:2002-06) unterschreitet. Der Epoxy-modifizierte Polyester wird weiter abgekühlt und mit einer Mischung von 238,0 Gew.-Teile Solventnaphtha 155/185, 24,0 Gew.-Teile 1-Methoxipropylacetate und 35,0 Gew.-Teile Ethylethoxypropionate angelöst. Es resultiert eine 65%-ige Bindemittellösung (Festkörpergehalt). Der so erhaltene Epoxy-modifizierte Polyesters weist eine Säurezahl von 8 mg KOH/g und eine OH-Zahl von 102 mg KOH/g auf, jeweils bezogen auf den Festkörper. Das gewichtsmittlere Molekulargewicht beträgt 14500 g/mol.

### 1.2 Herstellung polymerer Mikroteilchen

Zunächst erfolgt die Herstellung eines Trägerharzes: In einem Reaktor werden 5,762 Gew.-Teile Xylol, 5,762 Gew.-Teile Toluol, 0,179 Gew.-Teile Methansulfonsäure vorgelegt und auf 104°C erhitzt. Anschließend werden 80,615 Gew.-Teile 12-Hydroxystearinsäure dem Reaktor zugefahren und bei 171 °C im Rückfluss unter Entzug des Reaktionswassers gekocht. Die Reaktion ist bei Erreichung einer Säurezahl von 35 beendet. Nach Abkühlen wird der Festkörper mit Solventnaphtha auf 80 Gew.-Teile eingestellt.

Dann werden die eigentlichen polymeren Mikroteilchen hergestellt: In einem Reaktor werden 43,2 Gew.-Teile Solventnaphtha, 0,08 Gew.-Teile N,N-Dimethylcocosamin und 1,0 Gew.-Teile Ethylacetat vorgelegt und auf 104°C erhitzt. Der Reaktor wird unter Druck von 0,69 bar gesetzt und innerhalb von 2 h simultan mit einer Monomerenmischung bestehend aus 27,6 Gew.-Teilen Methylmethacrylat, 3,8 Gew.-Teilen 2-Hydroxypropylmethacrylat, 0,8 Gew.-Teilen Glycidylmethacrylat, 12,8 Gew.-Teilen des oben beschriebenen Trägerharzes, 1,5 Gew.-Teilen Methacrylsäure und 1,5 Gew.-Teilen Octylmercaptan und einer Initiatormischung bestehend aus 2,3 Gew.-Teilen Tert.-Butyl-per-oxy-2-ethylhexanoat und 5,1 Gew.-Teilen Solventnaphtha versetzt. Anschließend wird 3 h bei oben genannter Temperatur und

Druck gehalten, bevor abgekühlt und mit Solventnaphtha auf einen Festkörper von 41,0% eingestellt wird.

Zur Herstellung des erfindungsgemäßen Basislacks 1 (B-1) und der Vergleichs-Basislacke V-2 und V-3 wurden die in Tabelle 1 aufgeführten Komponenten in den angegebenen Mengen (Gewichtsteile) vermischt und die resultierende Mischung homogenisiert. Zur Einstellung der Applikationsviskosität (Spritzviskosität) erfolgte jeweils ein nochmaliger Zusatz von Butylacetat (5 Gewichtsteile). Tabelle 1 zeigt zudem die Festkörpergehalte (FK), den Pigmentgehalt (PG), den Gehalt an organischen Lösemitteln (LM) und den Bindemittelgehalt (BM) der eingesetzten Komponenten sowie den Festkörpergehalt und die Viskosität der resultierenden Basislacke.

**Tabelle 1: Zusammensetzungen und Kenndaten der Basislacke 1, V-2 und V-3**

| | **FK** | **BM** | **LM** | **PG** | **V-2** | **V-3** | **B-1** |
|---|---|---|---|---|---|---|---|
| polymere Mikroteilchen (1.2) | 31 | 31 | 69 | 0 | 28,0 | 26,0 | 26,0 |
| Resimene® 755 | 100 | 100 | 0 | 0 | 12,0 | 17,0 | 17,0 |
| Butylacetat | 0 | 0 | 100 | 0 | 10,0 | 10,0 | 10,0 |
| Polyester (E) (1.1) | 65 | 65 | 35 | 0 | 25,0 | 22,0 | 22,0 |
| Katalysator | 33,3 | 0 | 66,7 | 0 | 1,0 | 1,0 | 1,0 |
| Butylacetat | 0 | 0 | 100 | 0 | 10,0 | 10,0 | 10,0 |
| Aluminiumpigment | 75 | 0 | 25 | 75 | 7,0 | 7,0 | 7,0 |
| Butylacetat | 0 | 0 | 100 | 0 | 7,0 | 7,0 | 6,8 |
| Organosiloxan (D) | 100 | 100 | 0 | 0 | | | 0,2 |
| | **Summe [%]** | | | | 100,0 | 100,0 | 100,0 |
| | **Festkörper [%]** | | | | 42,5 | 44,9 | 45,1 |
| | **Anfallviskosität (Ford 3 Cup, 23°C)** | | | | 31 | 31 | 31 |
| | **Zusatz Butylacetat** | | | | 5 | 5 | 5 |
| | **Festkörper bei Applikation [%]** | | | | 39 | 39 | 39 |
| | **Applikationsviskosität (Ford 3 Cup, 23°C)** | | | | 26 | 26 | 26 |

| | | | | | | | |
|---|---|---|---|---|---|---|---|
| Resimene® 755: Melaminharz Fa. Ineos Katalysator: Nacure® 5225 (Fa. King Industries) Aluminiumpigment: Metalux® Alu (Fa. Eckart) Organosiloxan (D): Eingesetzt wurde das Handelsprodukt Silwet® L-7608 (Fa. Momentive) | | | | | | | |

Alle Basislacke besitzen einen Festkörpergehalt von 39 % und haben dabei bei 23°C eine Viskosität von 26 s Auslaufzeit im Ford 3 Cup (Spritzviskosität). Der Anteil des Melaminharzes im Lack bei Spritzviskosität in V-2 beträgt 11 Gew.-%, in V-3 und B-1 16 Gew.-%, jeweils bezogen auf die Gesamtzusammensetzung.

### 2. Herstellung von Vergleichs- und erfindungsgemäßen Mehrschichtlackierungen MV-1 bis MV-4 und ME-1, ME-2

Für die Prüfung von anwendungstechnischen Eigenschaften wurden zunächst Mehrschichtlackierungen unter Einsatz der Basislacke B-1, V-2 und V-3 in üblicher und bekannter Weise auf Prüftafeln der Abmessungen 30 x 20 cm hergestellt.

Hierzu wurden KTL-beschichtete Stahlprüftafeln mit einem handelsüblichen konventionellen, grauen Füller auf Polyester-Basis der Firma BASF Coatings AG beschichtet, wonach die resultierenden Füllerschichten für 5 min bei 20°C und einer relativen Luftfeuchtigkeit von 65% abgelüftet und in einem Umluftofen für 5 min bei 165°C Objekttemperatur eingebrannt wurden.

Nach dem Abkühlen der Prüftafeln auf 20 °C wurden die Basislacke B-1, V-2 und V-3 durch ESTA-Spritzautomatenapplikation aufgetragen, sodass nach der später erfolgenden Härtung eine Trockenfilmschichtdicke von 17-19 Mikrometern resultiert. Anschließend wurden die Basislackschichten während 5 Minuten abgelüftet und mit einem lösemittelhaltigen, gegebenenfalls Organosiloxan-modifizierten (siehe unten) High-Solid-1-Komponenten-Klarlack der Firma BASF Coatings GmbH überschichtet, sodass nach der folgenden Härtung eine Trockenfilmschichtdicke von 37-39 Mikrometern resultiert. Hiernach wurde für eine Ruhezeit von 5 Minuten abgelüftet und dann die Basislackschichten und die überschichteten Klarlackschichten für 10 Minuten bei 140°C Objekttemperatur gemeinsam eingebrannt. Es resultierten die Vergleichs- und erfindungsgemäßen Mehrschichtlackierungen MV-1 bis MV-4 (Vergleich) und ME-1, ME-2 (erfindungsgemäß).

Der eingesetzte Klarlack besitzt bei Spritzviskosität (Auslaufzeit im Ford 3 Cup, 23°C, 26 s) einen Festkörpergehalt von 48 %. Es handelt sich um einen Klarlack, der ein carbamatfunktionelles Acrylat als Bindemittel und ein Melaminharz (Resimene® 747) als Vernetzungsmittel enthält. Neben Mehrschichtlackierungen, für deren Herstellung der originäre Klarlack der BASF Coatings GmbH (CC Standard) eingesetzt wurde, wurden zudem Mehrschichtlackierungen hergestellt, bei denen der Klarlack mit 2 Gew.-% Organosiloxan (D) (Silwet® L-7608) versetzt beziehungsweise modifiziert war (CC (D)).

Tabelle 2 gibt einen Überblick über die bei der Herstellung der Mehrschichtlackierungen eingesetzten Basis- und Klarlacke.

**Tabelle 2: Hergestellte Mehrschichtlackierungen**

| **Versuch** | **MV-1** | **MV-2** | **MV-3** | **MV-4** | **ME-1** | **ME-2** |
|---|---|---|---|---|---|---|
| **Basislack** | V-2 | V-3 | V-2 | V-3 | B-1 | B-1 |
| **Klarlack** | CC Standard. | CC Standard. | CC (D) | CC (D) | CC Standard | CC (D) |

### 3. Anwendungstechnische Untersuchung

### 3.1 Appearance

Untersucht wurde zunächst der optische Gesamteindruck (die Appearance) der hergestellten Mehrschichtlackierungen. Die Messungen wurden mit Hilfe eines "Wave Scan DOI"-Messgeräts (Fa. Byk/Gardner) durchgeführt. Ermittelt wurde der CF Wert, in dessen Berechnung die mit dem genannten Gerät gemessenen Werte LU (Luster, Bewertung des Glanzes), SH (Sharpness, Bewertung der Abbildungsschärfe) und OP (Orange Peel, Bewertung des Verlaufs) eingehen und somit ein Maß für die optische Gesamtqualität beziehungsweise den optischen Gesamteindruck der Beschichtung ist (CF = 0,50*OP + 0,35*SH + 0,15*LU). Je höher der CF Wert ist, desto hochwertiger ist die Appearance.

### 3.2 Scheibenverklebungshaftung

Weiterhin wurde die Scheibenverklebungshaftung, das heißt also die Verklebungsqualität zwischen Klebstoffmaterial und der Mehrschichtlackierung, getestet.

Hierzu wurde streifenförmig über die komplette Klarlackschicht einer jeden Mehrschichtlackierungen MV-1 bis MV-4, ME-1 und ME-2 nach 24 Stunden Lagerung bei Raumtemperatur (25°C) ein feuchtigkeitshärtender, isocyanat-basierter Klebstoff (Betaseal® 1858-1, Fa. Dow Automotive) in Längsrichtung aufgebracht. Der Kleber wurde für 72 h bei 50% Luftfeuchtigkeit und 25°C ausgehärtet. Nach der Aushärtung des Klebers wird ein sogenannter Quick-Knife-Test durchgeführt. Dazu wird der gehärtete Klebermassenstreifen an einer kurzen Seite (das heißt an einem der beiden Enden des Streifens) parallel zum Substrat und innerhalb der Klebstoffschicht etwa 5 cm weit eingeschnitten, sodass ein oberes mit der Hand greifbares Ende von gehärtetem Klebstoffmaterial und eine untere etwa 5 cm lange, entsprechend dünnere Klebstoffschicht auf dem Substrat entsteht. An dem greifbaren Ende wird dann in Richtung des fortlaufenden Klebermassenstreifens gezogen, sodass der zuvor eingebrachte Einschnitt innerhalb der Klebstoffschicht sukzessive verlängert wird. Gleichzeitig werden bei diesem Abziehen etwa alle 12 mm senkrecht zum Klebstoffmassenstreifen in die entsprechend dünnere Klebstoffschicht bis auf das Substrat (das heißt bis auf die Oberfläche der Klarlackschicht) Schnitte mit einem Messer eingebracht. Die Schnitte werden jeweils direkt vor der Stelle eingebracht, an der der schon abgezogene Teil des Klebstoffstreifens und der Teil des noch ursprünglichen Teil Klebstoffstreifens aufeinandertreffen.

Reißt die Klebstoffschicht komplett innerhalb der Schicht, das heißt ideal entlang des anfangs eingebrachten Schnitts parallel zum Substrat, ist die Scheibenverklebungshaftung akzeptabel beziehungsweise sehr gut. Denn in diesem Fall ist die Scheibenverklebungshaftung, das heißt die Verklebung zwischen Klarlackschicht und Klebstoff größer als die (jedenfalls ausreichenden) Adhäsionskräfte innerhalb der Klebstoffschicht. Kommt es aber zumindest anteilig an der Grenzfläche Klebstoffschicht/Klarlackschicht zur Delamination, so ist die Verklebungskraft an dieser Grenzfläche offensichtlich vermindert beziehungsweise nicht ausreichend.

### Konkrete Bewertungsskala:

1: 0 % Rissfläche innerhalb der Klebstoffschicht (sehr schlechte Scheibenverklebung)
2: etwa 25 % Rissfläche innerhalb der Klebstoffschicht (schlechte Scheibenverklebung)
3: etwa 50 % Rissfläche innerhalb der Klebstoffschicht (noch nicht ausreichende Scheibenverklebung)
4: 75 % Rissfläche innerhalb der Klebstoffschicht (gute Scheibenverklebung)
5: 100 % Rissfläche innerhalb der Klebstoffschicht (sehr gute Scheibenverklebung)

Tabelle 3 zeigt die Ergebnisse von Appearance und Scheibenverklebungshaftung für die unterschiedlichen Mehrschichtlackierungen beziehungsweise die Mehrschichtbeschichtungen

**Tabelle 3: Ergebnisse der anwendungstechnischen Untersuchungen**

| **Versuch** | **MV-1** | **MV-2** | **MV-3** | **MV-4** | **ME-1** | **ME-2** |
|---|---|---|---|---|---|---|
| **Basislack** | V-2 | V-3 | V-2 | V-3 | B-1 | B-1 |
| **Klarlack** | CC Standard. | CC Standard. | CC (D) | CC (D) | CC Standard | CC (D) |
| **Scheibenverklebung** | 5 | 1 | 3 | 2 | 4 | 5 |
| **Appearance** | 50 | 55 | 49 | 54 | 56 | 54 |

Die Ergebnisse zeigen eindeutig, dass die erfindungsgemäßen Systeme eine hervorragende Appearance mit einer sehr guten Scheibenverklebungshaftung vereinen. Insbesondere zeigt sich im Vergleich zu den Standardsystemen, dass bei diesen jeweils eine der Eigenschaften auf Kosten der anderen Eigenschaft inakzeptabel ist. Entweder wird eine gute beziehungsweise zumindest nicht sehr schlechte Scheibenverklebungshaftung (niedriger Anteil Melaminharz im Basislack V-2) gepaart mit einer schlechten Appearance erreicht oder aber es wird eine schlechte Scheibenverklebungshaftung (hoher Anteil Melaminharz im Basislack V-3) gepaart mit einer guten Appearance erzielt. Überraschenderweise wird durch den Einsatz des Organosiloxans (D) im Basislack eine hervorragende Balance zwischen den genannten Eigenschaften erzielt. Dies zeigt sich insbesondere im Vergleich der Systeme MV-2 mit ME-1 und MV-4 mit ME-2, deren jeweils einziger Unterschied im Zusatz des Organosiloxans zum Basislack liegt. Noch überraschender war, dass durch den Zusatz zum Basislack, der nicht in direktem Kontakt zur Klebstoffschicht steht, ein wesentlich vorteilhafterer Effekt erreicht werden kann, als durch den Zusatz zum Klarlack.

## Patentansprüche

1. Lösungsmittelbasiertes, pigmentiertes Beschichtungsmittel mit einem Festkörpergehalt von mindestens 35 % enthaltend
(A) mindestens ein Melaminharz,
(B) mindestens ein Pigment,
(C) mindestens ein organisches Lösungsmittel und
(D) mindestens ein Organosiloxan der allgemeinen Formel (I) 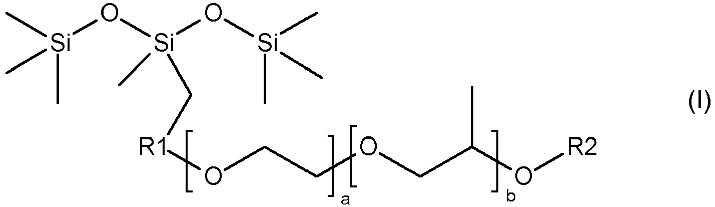 wobei R₁ = CₙH₂ₙ mit n = 1 bis 3; R₂ = H oder CₘH₂ₘ₊₁ mit m = 1 bis 4; a = 0 bis 20; b = 0 bis 20 und a + b = 2 bis 40.

2. Lösungsmittelbasiertes, pigmentiertes Beschichtungsmittel nach Anspruch 1, **dadurch gekennzeichnet, dass** es (E) mindestens ein Acrylat-Polymer, Polyurethan-Polymer und/oder Polyester als Bindemittel enthält.

3. Lösungsmittelbasiertes, pigmentiertes Beschichtungsmittel nach Anspruch 2, **dadurch gekennzeichnet, dass** das Bindemittel (E) eine OH-Zahl von 15 bis 300 mg KOH/g aufweist.

4. Lösungsmittelbasiertes, pigmentiertes Beschichtungsmittel nach einem der Ansprüche 2 oder 3, **dadurch gekennzeichnet, dass** als Bindemittel (E) mindestens ein Polyester enthalten ist.

5. Lösungsmittelbasiertes, pigmentiertes Beschichtungsmittel nach einem der Ansprüche 1 bis 4, **dadurch gekennzeichnet, dass** mindestens ein Aluminiumplättchenpigment als Pigment (B) enthalten ist.

6. Lösungsmittelbasiertes, pigmentiertes Beschichtungsmittel nach einem der Ansprüche 1 bis 5, **dadurch gekennzeichnet, dass** für das Organosiloxan (D) R₁ = C₂H₄; R₂ = H oder CH₃; a = 2 bis 18; b = 0 bis 10 und a + b = 4 bis 20 gilt.

7. Lösungsmittelbasiertes, pigmentiertes Beschichtungsmittel nach Anspruch 6, **dadurch gekennzeichnet, dass** für das Organosiloxan (D) R₁ = C₂H₄, R₂ = H; a = 5 bis 15 und b = 0 gilt.

8. Verfahren zur Herstellung einer Mehrschichtlackierung, bei dem
(1) mindestens ein Basislack auf ein Substrat aufgebracht wird,
(2) aus dem in Stufe (1) aufgebrachten Basislack ein Polymerfilm gebildet wird,
(3) auf die so erhaltene Basislackschicht mindestens ein Klarlack aufgebracht wird und anschließend
(4) die Basislackschicht zusammen mit dem in Stufe (3) aufgebrachten Klarlack gehärtet wird,
**dadurch gekennzeichnet, dass** als Basislack ein Beschichtungsmittel nach einem der Ansprüche 1 bis 7 eingesetzt wird und wobei eine Klarlackschicht die oberste Schicht der Mehrschichtlackierung ist.

9. Verfahren nach Anspruch 8, **dadurch gekennzeichnet, dass** vor dem Aufbringen des Basislacks zunächst mindestens eine Grundierung und dann mindestens ein Füller auf das Substrat aufgebracht werden.

10. Verfahren nach einem der Ansprüche 8 oder 9, **dadurch gekennzeichnet, dass** als Klarlack ein lösungsmittelbasierter Klarlack mit einem Festkörpergehalt von mindestens 45 % eingesetzt wird.

11. Verfahren nach einem der Ansprüche 8 bis 10, **dadurch gekennzeichnet, dass** der Klarlack mindestens ein Polyurethanharz und/oder Polyacrylatharz und/oder Polyesterharz enthaltend Hydroxyl- und/oder Carbamatgruppen als Bindemittel und mindestens ein Melaminharz als Vernetzungsmittel enthält.

12. Verfahren nach einem der Ansprüche 8 bis 11, **dadurch gekennzeichnet, dass** als Substrat ein metallisches Substrat oder ein Kunststoffsubstrat eingesetzt wird.

13. Mehrschichtlackierung, die nach einem Verfahren gemäß einem der Ansprüche 8 bis 12 hergestellt wurde.

14. Verfahren zur Herstellung einer Mehrschichtbeschichtung bei dem
(1) eine Mehrschichtlackierung gemäß Anspruch 13 hergestellt wird und
(2) unmittelbar auf die oberste Klarlackschicht der Mehrschichtlackierung ein Klebstoff aufgebracht wird, wobei eine Klebstoffschicht ausgebildet wird.

15. Mehrschichtbeschichtung, die nach dem Verfahren gemäß Anspruch 14 hergestellt wurde.

16. Verwendung einer Mehrschichtbeschichtung nach Anspruch 15 zum Verkleben von Glasscheiben auf einem mit der Mehrschichtbeschichtung beschichteten Substrat, wobei
(1) eine Mehrschichtlackierung gemäß Anspruch 13 hergestellt wird,
(2) unmittelbar auf die oberste Klarlackschicht der Mehrschichtlackierung ein Klebstoff aufgebracht wird, wobei eine Klebstoffschicht auf der Mehrschichtlackierung und damit eine Mehrschichtbeschichtung gemäß Anspruch 15 ausgebildet wird,
und
(3) eine Glasscheibe auf die Klebstoffschicht aufgebracht wird und anschließend der Klebstoff ausgehärtet wird.

## Claims

1. Solvent-based, pigmented coating composition having a solids content of at least 35%, comprising
(A) at least one melamine resin,
(B) at least one pigment,
(C) at least one organic solvent, and
(D) at least one organosiloxane of the general formula (I) 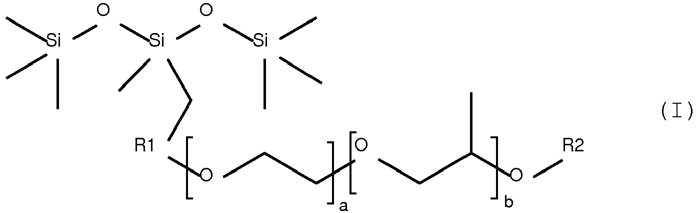 where R₁ = CₙH₂ₙ with n = 1 to 3; R₂ = H or CₘH₂ₘ₊₁ with m = 1 to 4; a = 0 to 20; b = 0 to 20; and a + b = 2 to 40.

2. Solvent-based, pigmented coating composition according to Claim 1, **characterized in that** it comprises (E) at least one acrylate polymer, polyurethane polymer and/or polyester as binder.

3. Solvent-based, pigmented coating composition according to Claim 2, **characterized in that** the binder (E) has an OH number of 15 to 300 mg KOH/g.

4. Solvent-based, pigmented coating composition according to either of Claims 2 and 3, **characterized in that** at least one polyester is included as binder (E).

5. Solvent-based, pigmented coating composition according to any of Claims 1 to 4, **characterized in that** at least one aluminum flake pigment is included as pigment (B).

6. Solvent-based, pigmented coating composition according to any of Claims 1 to 5, **characterized in that** for the organosiloxane (D) R₁ = C₂H₄; R₂ = H or CH₃; a = 2 to 18; b = 0 to 10; and a + b = 4 to 20.

7. Solvent-based, pigmented coating composition according to Claim 6, **characterized in that** for the organosiloxane (D) R₁ = C₂H₄, R₂ = H; a = 5 to 15; and b = 0.

8. Process for producing a multicoat paint system, in which
(1) at least one basecoat material is applied to a substrate,
(2) a polymer film is formed from the basecoat material applied in stage (1),
(3) at least one clearcoat material is applied to the resultant basecoat film, and subsequently
(4) the basecoat film is cured together with the clearcoat material applied in stage (3),
**characterized in that** use is made as basecoat material of a coating composition according to any of Claims 1 to 7, and with the topmost coat of the multicoat paint system being a clearcoat film.

9. Process according to Claim 8, **characterized in that** first at least one primer and then at least one surfacer are applied to the substrate before the basecoat material is applied.

10. Process according to either of Claims 8 and 9, **characterized in that** said clearcoat material used is a solvent-based clearcoat material having a solids content of at least 45%.

11. Process according to any of Claims 8 to 10, **characterized in that** the clearcoat material comprises at least one polyurethane resin and/or polyacrylate resin and/or polyester resin comprising hydroxyl groups and/or carbamate groups as binder and at least one melamine resin as crosslinking agent.

12. Process according to any of Claims 8 to 11, **characterized in that** said substrate used is a metallic substrate or a plastics substrate.

13. Multicoat paint system produced by a process according to any of Claims 8 to 12.

14. Process for producing a multicoat coating system, in which
(1) a multicoat paint system according to Claim 13 is produced and
(2) an adhesive is applied directly to the topmost clearcoat film of the multicoat paint system, forming a layer of adhesive.

15. Multicoat coating system produced by the process according to Claim 14.

16. Use of a multicoat coating system according to Claim 15 for adhesively bonding glazing sheets on a substrate coated with the multicoat coating system, where
(1) a multicoat paint system according to Claim 13 is produced,
(2) an adhesive is applied directly to the topmost clearcoat film of the multicoat paint system, forming a layer of adhesive on the multicoat paint system and hence forming a multicoat coating system according to Claim 15,
and
(3) a glazing sheet is applied to the layer of adhesive and then the adhesive is cured.

## Revendications

1. Agent de revêtement pigmenté à base de solvant, ayant une teneur en solides d'au moins 35 %, contenant :
(A) au moins une résine de mélamine,
(B) au moins un pigment,
(C) au moins un solvant organique et
(D) au moins un organosiloxane de formule générale (I) 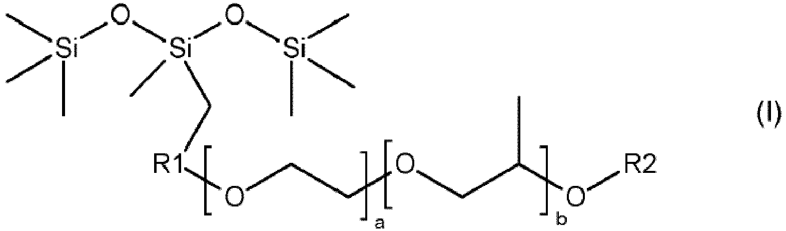 dans laquelle R₁ = CₙH₂ₙ avec n = 1 à 3 ; R₂ = H ou CₘH₂ₘ₊₁ avec m = 1 à 4 ; a = 0 à 20 ; b = 0 à 20 et a + b = 2 à 40.

2. Agent de revêtement pigmenté à base de solvant selon la revendication 1, **caractérisé en ce qu'**il contient (E) au moins un polymère d'acrylate, un polymère de polyuréthane et/ou un polyester en tant que liant.

3. Agent de revêtement pigmenté à base de solvant selon la revendication 2, **caractérisé en ce que** le liant (E) présente un indice OH de 15 à 300 mg KOH/g.

4. Agent de revêtement pigmenté à base de solvant selon l'une quelconque des revendications 2 ou 3, **caractérisé en ce qu'**au moins un polyester est contenu en tant que liant (E).

5. Agent de revêtement pigmenté à base de solvant selon l'une quelconque des revendications 1 à 4, **caractérisé en ce qu'**au moins un pigment à base de paillettes d'aluminium est contenu en tant que pigment (B) .

6. Agent de revêtement pigmenté à base de solvant selon l'une quelconque des revendications 1 à 5, **caractérisé en ce que**, pour l'organosiloxane (D), R₁ = C₂H₄ ; R₂ = H ou CH₃ ; a = 2 à 18 ; b = 0 à 10 et a + b = 4 à 20.

7. Agent de revêtement pigmenté à base de solvant selon la revendication 6, **caractérisé en ce que**, pour l' organosiloxane (D), R₁ = C₂H₄ ; R₂ = H ; a = 5 à 15 et b = 0.

8. Procédé de fabrication d'un vernissage multicouche, selon lequel
(1) au moins un vernis de base est appliqué sur un substrat,
(2) un film polymère est formé à partir du vernis de base appliqué à l'étape (1),
(3) au moins un vernis transparent est appliqué sur la couche de vernis de base ainsi obtenue, puis
(4) la couche de vernis de base est durcie conjointement avec le vernis transparent appliqué à l'étape (3),
**caractérisé en ce qu'**un agent de revêtement selon l'une quelconque des revendications 1 à 7 est utilisé en tant que vernis de base et une couche de vernis transparent est la couche supérieure du vernissage multicouche.

9. Procédé selon la revendication 8, **caractérisé en ce qu'**avant l'application du vernis de base, au moins une couche de base, puis au moins une matière de remplissage sont tout d'abord appliqués sur le substrat.

10. Procédé selon l'une quelconque des revendications 8 ou 9, **caractérisé en ce qu'**un vernis transparent à base de solvant ayant une teneur en solides d'au moins 45 % est utilisé en tant que vernis transparent.

11. Procédé selon l'une quelconque des revendications 8 à 10, **caractérisé en ce que** le vernis transparent contient au moins une résine de polyuréthane et/ou une résine de polyacrylate et/ou une résine de polyester contenant des groupes hydroxyle et/ou carbamate en tant que liant et au moins une résine de mélamine en tant qu'agent de réticulation.

12. Procédé selon l'une quelconque des revendications 8 à 11, **caractérisé en ce qu'**un substrat métallique ou un substrat plastique est utilisé en tant que substrat.

13. Vernissage multicouche, qui a été fabriqué par un procédé selon l'une quelconque des revendications 8 à 12.

14. Procédé de fabrication d'un revêtement multicouche, selon lequel
(1) un vernissage multicouche selon la revendication 13 est fabriqué, et
(2) un adhésif est appliqué directement sur la couche de vernis transparent supérieur du vernissage multicouche, une couche adhésive étant formée.

15. Revêtement multicouche, qui a été fabriqué par le procédé selon la revendication 14.

16. Utilisation d'un revêtement multicouche selon la revendication 15 pour le collage de plaques de verre sur un substrat revêtu avec le revêtement multicouche, selon laquelle
(1) un vernissage multicouche selon la revendication 13 est fabriqué,
(2) un adhésif est appliqué directement sur la couche de vernis transparent supérieure du vernissage multicouche, une couche adhésive étant formée sur le vernissage multicouche et ainsi un revêtement multicouche selon la revendication 15,
et
(3) une plaque en verre est appliquée sur la couche adhésive, puis l'adhésif est durci.
